(19) Europäisches Patentamt / European Patent Office / Office européen des brevets

(11) **EP 3 393 166 B1**

(12) **EUROPEAN PATENT SPECIFICATION**

(45) Date of publication and mention of the grant of the patent:
**08.09.2021 Bulletin 2021/36**

(21) Application number: **16888834.5**

(22) Date of filing: **05.02.2016**

(51) Int Cl.:
**H04W 56/00** (2009.01)     **H04L 5/00** (2006.01)
**H04L 5/14** (2006.01)     **H04W 28/00** (2009.01)

(86) International application number:
**PCT/CN2016/073703**

(87) International publication number:
**WO 2017/133010 (10.08.2017 Gazette 2017/32)**

(54) **METHOD AND APPARATUS FOR PHYSICAL DOWNLINK CHANNEL TRANSMISSION**

VERFAHREN UND VORRICHTUNG ZUR ÜBERTRAGUNG EINES PHYSIKALISCHEN DOWNLINK-KANALS

PROCÉDÉ ET APPAREIL POUR UNE TRANSMISSION DE CANAL DE LIAISON DESCENDANTE PHYSIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.10.2018 Bulletin 2018/43**

(73) Proprietor: **Huawei Technologies Co., Ltd.
Longgang District
Shenzhen, Guangdong 518129 (CN)**

(72) Inventor: **XIA, Jinhuan
Shenzhen
Guangdong 518129 (CN)**

(74) Representative: **Gill Jennings & Every LLP
The Broadgate Tower
20 Primrose Street
London EC2A 2ES (GB)**

(56) References cited:
EP-A1- 3 182 634     EP-A1- 3 357 185
WO-A1-2013/141603     WO-A1-2016/018469
CN-A- 103 517 420     CN-A- 103 684 675
CN-A- 103 716 841     US-A1- 2013 301 524

• HUAWEI ET AL: "NB-PDCCH resource mapping", 3GPP DRAFT; R1-160024, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Budapest, HU; 20160118 - 20160120 17 January 2016 (2016-01-17), XP051053347, Retrieved from the Internet: URL:http://www.3gpp.org/ftp/Meetings_3GPP_SYNC/RAN1/Docs/ [retrieved on 2016-01-17]

• MEDIATEK INC: "Downlink control channel design for NB-IOT", 3GPP DRAFT; R1-160152 - DOWNLINK CONTROL CHANNEL DESIGN FOR NB-IOT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA , vol. RAN WG1, no. Budapest, HU; 20160118 - 20160120 17 January 2016 (2016-01-17), XP051053471, Retrieved from the Internet: URL:http://www.3gpp.org/ftp/Meetings_3GPP_SYNC/RAN1/Docs/ [retrieved on 2016-01-17]

EP 3 393 166 B1

**(Cont. next page)**

- LG ELECTRONICS: "Remaining issues on M-PDCCH transmission", 3GPP DRAFT; R1-156840 REMAINING ISSUES ON M-PDCCH TRANSMISSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Anaheim, USA; 20151115 - 20151122 15 November 2015 (2015-11-15), XP051003196, Retrieved from the Internet: URL:http://www.3gpp.org/ftp/Meetings_3GPP_ SYNC/RAN1/Docs/ [retrieved on 2015-11-15]
- ZTE: "Remaining issues on M-PDCCH for MTC enhancement", 3GPP DRAFT; R1-156664- M-PDCCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Anaheim, US; 20151115 - 20151122 15 November 2015 (2015-11-15), XP051003063, Retrieved from the Internet: URL:http://www.3gpp.org/ftp/Meetings_3GPP_ SYNC/RAN1/Docs/ [retrieved on 2015-11-15]
- ZTE: "Multiplexing of downlink channels for NB-IOT", 3GPP DRAFT; R1-160045 DL MUX, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Budapest, HU; 20160118 - 20160120 17 January 2016 (2016-01-17), XP051053368, Retrieved from the Internet: URL:http://www.3gpp.org/ftp/Meetings_3GPP_ SYNC/RAN1/Docs/ [retrieved on 2016-01-17]

**Description**

**TECHNICAL FIELD**

The present invention relates to the communications field, and in particular, to a physical downlink channel transmission method and an apparatus.

**BACKGROUND**

Currently, in an LTE (Long Term Evolution, Long Term Evolution plan) system, physical downlink channels transmitted in each downlink subframe include a PDCCH (Physical Downlink Control Channel, physical downlink control channel) and a PDSCH (Physical Downlink Shared Channel, physical downlink shared channel). The PDCCH carries scheduling assignment (Scheduling Assignment) information of the PDSCH and other control information (Control Information).

Standard bandwidths of the LTE system are 1.4 MHz, 3 MHz, 5 MHz, 10 MHz, 15 MHz, and 20 MHz, that is, megahertz. In the LTE system, a minimum bandwidth occupied by the PDCCH when the PDCCH is mapped in a frequency domain dimension is a minimum system standard bandwidth, 1.4 MHz.

However, with rapid development of communications technologies, a new type of terminal emerges. This type of terminal supports a relatively narrow radio frequency bandwidth. For example, a type-1 terminal supports uplink single-subcarrier SC-FDMA (Single-Carrier Frequency Division Multiple Access, single-carrier frequency division multiple access) transmission with a 3.75 kHz (kilohertz) orthogonal subcarrier spacing or uplink single-subchannel FDMA (Frequency Division Multiple Access, frequency division multiple access) transmission with a 3.75 kHz subchannel bandwidth, and/or supports uplink single-subcarrier SC-FDMA transmission with a 15 kHz orthogonal subcarrier spacing. A type-2 terminal supports uplink multi-subcarrier SC-FDMA transmission with a 15 kHz orthogonal subcarrier spacing.

The two types of terminals are mainly applied to communication in a physical network. A characteristic of the communication is that a bandwidth used by an uplink/downlink communications channel or signal is usually relatively narrow and is less than the minimum system standard bandwidth supported by the LTE system. Therefore, the two types of terminals and base stations supporting communication of the two types of terminals are collectively referred to as an NBIOT (Narrowband-Internet of Things, narrowband-Internet of Things) system. It should be noted that, the two types of terminals are a method for classifying terminals supported by the NBIOT system. A terminal supported by the NBIOT may also be reflected as a terminal supporting one, two, or three different terminal capabilities. To be specific, a first capability is supporting uplink SC-FDMA transmission with a 3.75 kHz orthogonal subcarrier spacing or uplink single-subchannel FDMA transmission with a 3.75 kHz subchannel bandwidth; a second capability is supporting uplink single-subcarrier SC-FDMA transmission with a 15 kHz orthogonal subcarrier spacing; and a third capability is supporting uplink multi-subcarrier SC-FDMA transmission with a 15 kHz orthogonal subcarrier spacing. In the NBIOT system, a bandwidth of the system is 180 kHz.

In the prior art, the PDCCH in the LTE system cannot be transmitted within such a narrow bandwidth. Therefore, a new physical downlink channel resource mapping method is urgently required.

3GPP DRAFT R1-160024 discloses some considerations on NB-PDCCH resource mapping. It specifically discloses that the number of RB pair can be chosen from {1/4, 1/2, 1}, which these values mean that {3, 6, 12} subcarriers can be used for one NB-PDCCH, respectively. It further discloses that one RB pair within one subframe can multiplex multiple NB-PDCCHs, and these multiplexed NB-PDCCHs can be in different coverage enhancement levels.

3GPP DRAFT R1-160152 discloses a downlink control channel design for NB-IOT. In particular, it suggests define the size of 1 NCCE as 1/2 PRB, and a NB-PDCCH can occupy one or more NCCE(s).

3GPP DRAFT R1-160045 discloses that for standalone and guard band operation modes, if the first three OFDM symbols are not used for NB-PBCH/NB-PSS/NB-SSS, it may be considered for NB-PDCCH/NB-PDSCH transmission for resource efficiency improvement.

**SUMMARY**

The present invention is defined by the appended claims. Embodiments of the present invention provide a physical downlink channel transmission method and an apparatus to resolve a problem that a PDCCH in an LTE system cannot be transmitted within a narrow bandwidth.

**BRIEF DESCRIPTION OF DRAWINGS**

To describe the technical solutions in the embodiments of the present invention more clearly, the following briefly describes the accompanying drawings required for describing the embodiments. Apparently, the accompanying drawings in the following description show merely some embodiments of the present invention.

FIG.1 is a schematic structural diagram of a type-1 frame structure;

FIG. 2 is a schematic structural diagram of a type-2 frame structure;

FIG. 3 is a schematic structural diagram of a downlink resource grid;

FIG. 4 is a schematic structural diagram of a communications system;

FIG. 5 is a schematic flowchart 1 of a physical downlink channel transmission method according to an embodiment of the present invention;

FIG. 6 is a schematic diagram of a resource mapping of an antenna port in a case of a normal CP in an LTE system;

FIG. 7 is a schematic diagram of a resource mapping of an antenna port in a case of an extended CP in an LTE system;

FIG. 8 is a schematic diagram of a resource mapping of an antenna port in a case of a normal CP;

FIG. 9 is a schematic diagram of a resource mapping of an antenna port in a case of an extended CP;

FIG. 10 is a schematic structural diagram 1 of an NB-CCE including REs in a case of a normal CP;

FIG. 11 is a schematic structural diagram 2 of an NB-CCE including REs in a case of a normal CP;

FIG. 12 is a schematic structural diagram 1 of an NB-CCE including REs in a case of an extended CP;

FIG. 13 is a schematic structural diagram 2 of an NB-CCE including REs in a case of an extended CP;

FIG. 14 is a schematic structural diagram 3 of an NB-CCE including REs in a case of a normal CP;

FIG. 15 is a schematic structural diagram 4 of an NB-CCE including REs in a case of a normal CP;

FIG. 16 is a schematic structural diagram 3 of an NB-CCE including REs in a case of an extended CP;

FIG. 17 is a schematic structural diagram 4 of an NB-CCE including REs in a case of an extended CP;

FIG. 18 is a schematic structural diagram 1 of a mapping of blank symbols to resources according to an embodiment of the present invention;

FIG. 19 is a schematic structural diagram 2 of a mapping of blank symbols to resources according to an embodiment of the present invention;

FIG. 20 is a schematic flowchart 2 of a physical downlink channel transmission method;

FIG. 21 is a schematic structural diagram 1 of a base station according to an embodiment of the present invention;

FIG. 22 is a schematic structural diagram 2 of a base station according to an embodiment of the present invention;

FIG. 23 is a schematic structural diagram 3 of a base station according to an embodiment of the present invention;

FIG. 24 is a schematic structural diagram 1 of a user terminal according to an embodiment of the present invention;

FIG. 25 is a schematic structural diagram 2 of a user terminal according to an embodiment of the present invention;

FIG. 26 is a schematic structural diagram 3 of a user terminal according to an embodiment of the present invention; and

FIG. 27 is a schematic structural diagram of a communications system.

**DESCRIPTION OF EMBODIMENTS**

The following clearly and completely describes the technical solutions in the embodiments of the present invention with reference to the accompanying drawings in the embodiments of the present invention. Apparently, the described embodiments are merely some but not all of the embodiments of the present invention.

In the specification, claims, and accompanying drawings of the present invention, the terms "first", "second", "third", "fourth" and so on are intended to distinguish between different objects but do not indicate a particular order. In addition, the terms "including", "having", or any other variant thereof, are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

In the following description, specific details such as a particular system structure, an interface, and a technology are set forth in an illustrative but not a restrictive sense to make a thorough understanding of the present invention. However, a person skilled in the art should know that the present invention may be practiced in other embodiments without these specific details. In other cases, detailed descriptions of well-known mobile devices, circuits, and methods are omitted, so that the present invention is described without being obscured by unnecessary details.

In addition, the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In an LTE system, physical resources for transmitting a PDCCH are in units of CCEs (Control Channel Element, control channel element). One CCE includes nine REGs (Resource Element Groups, resource element groups). Each REG includes four consecutive REs (Resource Element, resource element) in a same OFDM (Orthogonal Frequency Division Multiplexing, orthogonal frequency division multiplexing) symbol. REGs in frequency resources within an entire bandwidth of the LTE system are numbered sequentially in a frequency increase direction.

If a cell-specific reference signal CRS (Cell-Specific Reference Signal) exists in an REG, the REG indicates four consecutive REs except a CRS in a same OFDM symbol.

It should be noted that, if a CRS configured in a cell is a CRS on a single antenna port, when a quantity of REs included in an REG is calculated, CRSs on two antenna ports need to be excluded. For example, if CRSs on an antenna port 0 and an antenna port 1 are configured in the cell, when the quantity of REs included in the REG is calculated, the CRSs on the antenna port 0 and the antenna port 1 are excluded. If CRSs configured in the cell are CRSs on two antenna ports or four antenna ports, when the quantity of REs included in the REG is calculated, a quantity of CRSs that need to be excluded is determined according to the quantity of CRSs on the antenna ports configured in the cell according to an actual situation.

A quantity $N_{CCE}$ of available CCEs in the system may be understood as: a total quantity of REGs except REGs occupied by a PCFICH (Physical Control Format Indicator Channel, physical control format indicator channel) and a PHICH (Physical HARQ Indicator Channel, physical HARQ indicator channel) in the system, divided by 9, where a quantity of REGs occupied by the PCFICH is 4, and the PHICH does not necessarily occupy an REG.

Specifically, the quantity of available CCEs in the system may be expressed by using the following formula:

$$N_{CCE} = \left\lfloor N_{REG} / 9 \right\rfloor,$$

where $N_{REG}$ is the total quantity of REGs except the REGs occupied by the PCFICH and the PHICH in the system, and $\lfloor \bullet \rfloor$ is a round-down sign.

In the LTE system, numbers of the CCEs are consecutive, and the numbers are from 0 to $N_{CCE}$-1. A quantity of CCEs occupied by the PDCCH depends on downlink channel conditions of a terminal. For a terminal that has good downlink channel conditions, a base station may need to allocate only one CCE. For a terminal that has poor downlink channel conditions, the base station may allocate up to eight CCEs to the terminal.

To reduce complexity when the terminal decodes the PDCCH, in the LTE system, it is further specified that an index of a CCE at a start position of the PDCCH occupying N CCEs must be an integer multiple of N.

In the LTE system, one PDCCH may occupy 1, 2, 4, or 8 CCEs. Specifically, a format of the PDCCH is shown in Table 1.

**Table 1**

| Format of the PDCCH | Quantity of CCEs | Quantity of REGs |
|:---:|:---:|:---:|
| 0 | 1 | 9 |

(continued)

| Format of the PDCCH | Quantity of CCEs | Quantity of REGs |
|---|---|---|
| 1 | 2 | 18 |
| 2 | 3 | 36 |
| 3 | 4 | 72 |

As can be learned from the foregoing descriptions, in the prior art, the PDCCH is transmitted by using physical resources within the entire bandwidth of the LTE system. Standard bandwidths of the LTE system are 1.4 MHz, 3 MHz, 5 MHz, 10 MHz, 15 MHz, and 20 MHz. Therefore, a minimum bandwidth occupied by the physical resources for transmitting the PDCCH is a minimum system standard bandwidth, 1.4 MHz.

However, a bandwidth of an NBIOT system is 180 kHz. Therefore, the PDCCH in the existing LTE system cannot be transmitted by using physical resources within such a narrow bandwidth.

In view of the foregoing problem, embodiments of the present invention provide a physical downlink channel transmission method, an apparatus, and a system. A base station transmits an NB-PDCCH (Narrowband Physical Downlink Control Channel, narrowband physical downlink control channel) in an $n$th downlink subframe or a DwPTS (Downlink Pilot Time Slot, downlink pilot timeslot) in an $n$th subframe to a user terminal, where the NB-PDCCH is mapped to an NB-PDCCH mapped basic element whose frequency resource bandwidth is less than or equal to 180 kHz. In this way, the PDCCH can be transmitted in the NBIOT system.

To distinguish from the LTE system, in the embodiments of the present invention, a PBCH (Physical Broadcast Channel, physical downlink broadcast channel), a PSS (Primary Synchronization Signal, primary synchronization signal), an SSS (Secondary Synchronization Signal, secondary synchronization signal), a PDCCH, and a PDSCH in the LTE system are named a narrowband physical broadcast channel NB-PBCH, a narrowband primary synchronization signal NB-PSS, a narrowband secondary synchronization signal NB-SSS, a narrowband physical downlink control channel NB-PDCCH, and a narrowband physical downlink shared channel NB-PDSCH respectively in the NBIOT system.

It should be noted that, the names of the channels and the names of the signals are merely an example, and the names are mainly used for distinguishing between the LTE system and the NBIOT system. The present invention does not specifically limit the names used by the channels and signals in the NBIOT system.

For ease of understanding the embodiments of this application, related elements mentioned in the embodiments of the present invention are first described herein.

In the LTE system and the NBIOT system, types of frame structures include a type-1 frame structure applied to an FDD (Frequency Division Duplex, frequency division duplex) system and a type-2 frame structure applied to a TDD (Time Division Duplex, time division duplex) system.

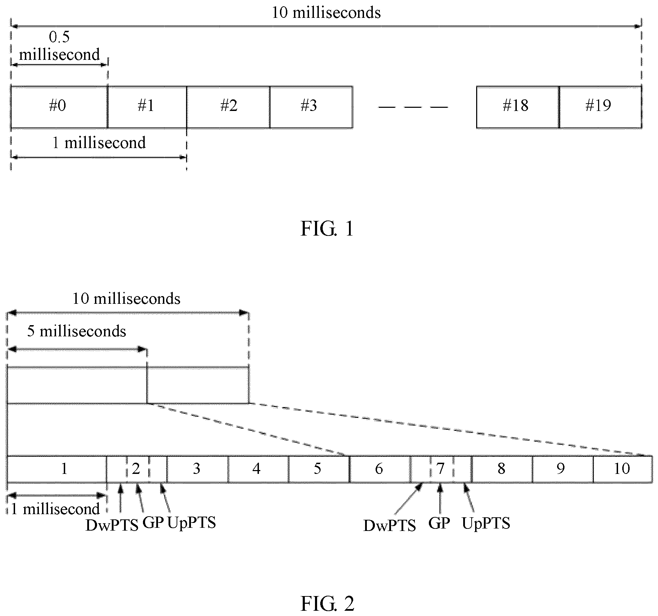

Specifically, as shown in FIG. 1, in the type-1 frame structure, a duration of a radio frame is 10 milliseconds, a radio frame includes 20 timeslots, each timeslot is 0.5 milliseconds, and two consecutive timeslots are a subframe. In other words, the type-1 frame structure includes 10 subframes, and a duration of each subframe is 1 millisecond.

As shown in FIG. 2, in the type-2 frame structure, a duration of a radio frame is 10 milliseconds, a radio frame includes two half frames whose durations are 5 milliseconds, and either of the half frames includes five 1-millisecond subframes.

The type-2 frame structure includes a downlink subframe, a special subframe, and an uplink subframe. The special subframe includes a DwPTS, an UpPTS (Uplink Pilot Time Slot, uplink pilot timeslot), and a guard period GP (Guard period).

In the special subframe, the DwPTS is always used for downlink transmission, the UpPTS is always used for uplink transmission, and the GP is a downlink-to-uplink guard period. A total duration of the three is 1 millisecond.

Specifically, an uplink-downlink configuration of the type-2 frame structure is shown in the following Table 2, where D denotes a downlink subframe, S denotes a special subframe, and U denotes an uplink subframe.

When a downlink-to-uplink switch-point periodicity is 5 milliseconds, a special subframe exists in both of the two half frames. When a downlink-to-uplink switch-point periodicity is 10 milliseconds, a special subframe exists only in one half frame.

Durations of the DwPTS, the GP, and the UpPTS in the special subframe of the type-2 frame structure are shown in the following Table 3.

In the type-1 frame structure and the type-2 frame structure, a quantity of OFDM symbols included in each subframe varies according to a length of a CP (Cyclic Prefix, cyclic prefix).

When the CP is a normal CP, each timeslot includes seven OFDM symbols. When the CP is an extended CP, each timeslot includes six OFDM symbols.

All signals transmitted in each timeslot may be described by using one or more RGs (Resource Grid, resource grid).

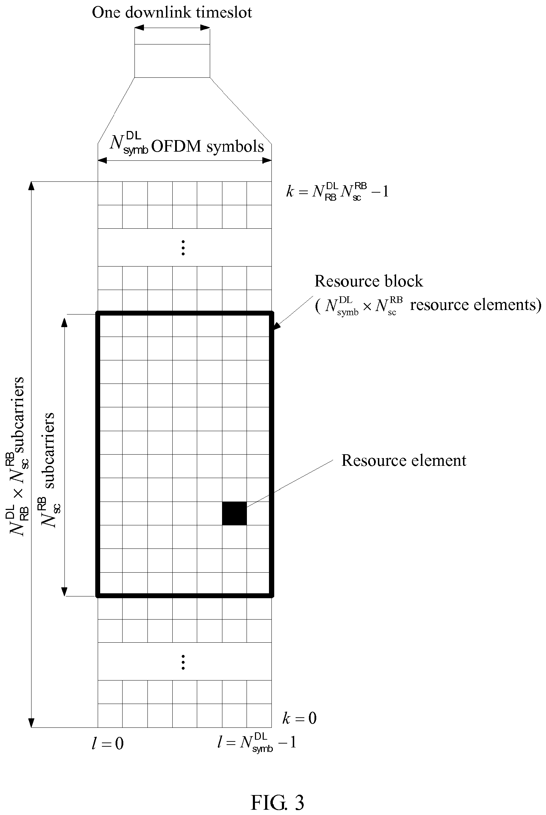

As shown in FIG. 3, each resource grid includes $N_{\mathrm{RB}}^{\mathrm{DL}} N_{\mathrm{sc}}^{\mathrm{RB}}$ subcarriers and $N_{\mathrm{symb}}^{\mathrm{DL}}$ OFDM symbols, where a value of $N_{\mathrm{RB}}^{\mathrm{DL}}$ depends on a transmission bandwidth in a downlink configuration and satisfies $N_{\mathrm{RB}}^{\mathrm{min,DL}} \leq N_{\mathrm{RB}}^{\mathrm{DL}} \leq N_{\mathrm{RB}}^{\mathrm{max,DL}}$. In the system, a minimum downlink bandwidth $N_{\mathrm{RB}}^{\mathrm{min,DL}}$ is equal to 6, and a maximum downlink bandwidth $N_{\mathrm{RB}}^{\mathrm{max,DL}}$ is equal to 110.

The quantity $N_{\mathrm{symb}}^{\mathrm{DL}}$ of OFDM symbols included in each timeslot depends on the length of the cyclic prefix and a subcarrier spacing, as shown in Table 4.

**Table 2**

| Configuration | Switch-point periodicity | Subframe | | | | | | | | | |
|:---:|:---:|:---:|:---:|:---:|:---:|:---:|:---:|:---:|:---:|:---:|:---:|
| | | 0 | 1 | 2 | 3 | 4 | 5 | 6 | 7 | 8 | 9 |
| 0 | 5 milliseconds | D | S | U | U | U | D | S | U | U | U |
| 1 | 5 milliseconds | D | S | U | U | D | D | S | U | U | D |
| 2 | 5 milliseconds | D | S | U | D | D | D | S | U | D | D |
| 3 | 10 milliseconds | D | S | U | U | U | D | D | D | D | D |
| 4 | 10 milliseconds | D | S | U | U | D | D | D | D | D | D |
| 5 | 10 milliseconds | D | S | U | D | D | D | D | D | D | D |
| 6 | 5 milliseconds | D | S | U | U | U | D | S | U | U | D |

Each element in an RG is referred to as an RE (Resource Element, resource element), and each RE is identified by an index pair (*k,l*) in a timeslot, where $k = 0, ..., N_{\mathrm{RB}}^{\mathrm{DL}} N_{\mathrm{sc}}^{\mathrm{RB}} - 1$, $l = 0, ..., N_{\mathrm{symb}}^{\mathrm{DL}} - 1$, and *k* and *l* are indexes in a frequency domain and a time domain respectively.

An RB (Resource Block, resource block) is used to describe a mapping from a physical channel to a resource element. An RB includes $N_{\mathrm{symb}}^{\mathrm{DL}}$ consecutive OFDM symbols in time, and includes $N_{\mathrm{sc}}^{\mathrm{RB}}$ consecutive subcarriers in the frequency domain, where values of $N_{\mathrm{symb}}^{\mathrm{DL}}$ and $N_{\mathrm{sc}}^{\mathrm{RB}}$ are shown in Table 4. Therefore, an RB includes $N_{\mathrm{symb}}^{\mathrm{DL}} \times N_{\mathrm{sc}}^{\mathrm{RB}}$ REs. An RB corresponds to a timeslot in the time domain, and corresponds to 180 kHz in the frequency domain.

Specifically, numbers of RBs are from 0 to $N_{\mathrm{RB}}^{\mathrm{DL}} - 1$ in the frequency domain. A relationship between a sequence number $n_{\mathrm{PRB}}$ of an RB and a resource element (*k,l*) in a timeslot and in the frequency domain may be expressed as:

$$n_{\text{PRB}} = \left\lfloor \frac{k}{N_{\text{sc}}^{\text{RB}}} \right\rfloor.$$

Table 3

| Special subframe configuration | Downlink normal CP | | | Downlink extended CP | | |
|---|---|---|---|---|---|---|
| | DwPTS | UpPTS | | DwPTS | UpPTS | |
| | | Uplink normal CP | Uplink extended CP | | Uplink normal CP | Uplink extended CP |
| 0 | 6592 $T_S$ | 2192 $T_S$ | 2560 $T_S$ | 7680 $T_S$ | 2192 $T_S$ | 2560 $T_S$ |
| 1 | 19760 $T_S$ | | | 20480 $T_S$ | | |
| 2 | 21952 $T_S$ | | | 23040 $T_S$ | | |
| 3 | 24144 $T_S$ | | | 25600 $T_S$ | | |
| 4 | 26336 $T_S$ | | | 7680 $T_S$ | 4384 $T_S$ | 5120 $T_S$ |
| 5 | 6592 $T_S$ | 4384 $T_S$ | 5120 $T_S$ | 20480 $T_S$ | | |
| 6 | 19760 $T_S$ | | | 23040 $T_S$ | | |
| 7 | 21952 $T_S$ | | | 12800 $T_S$ | | |
| 8 | 24144 $T_S$ | | | - | - | - |
| 9 | 13168 $T_S$ | | | - | - | - |

Ts is a basic unit of the time domain in the LTE system, and Ts = 1/(15000*2048) second.

Table 4

| Configuration | | $N_{\text{sc}}^{\text{RB}}$ | $N_{\text{symb}}^{\text{DL}}$ |
|---|---|---|---|
| Normal CP | $\Delta f$ = 15 kHz | 12 | 7 |
| | $\Delta f$ = 15 kHz | | 6 |
| Extended CP | $\Delta f$ = 7.5 kHz | 24 | 3 |

Application scenarios to which the embodiments of the present invention are applicable may approximately include the following three application scenarios according to different frequency resources that are used:

1. Independent deployment scenario: Dedicated frequency resources of the NBIOT system are networked to support two new types of terminals, and a used frequency resource may be a resource in a frequency band recycled from a GSM (Global System for Mobile Communications, Global System for Mobile Communications) system for reuse, or in a frequency band used by a 3G (3rd-Generation, third generation mobile communications technology) system or the LTE system.

2. Guard band deployment scenario: A frequency resource used by the NBIOT system is located in a guard band of a frequency band used by the LTE system.

3. In-band deployment scenario: A frequency resource used by the NBIOT system is located in a standard carrier of the LTE system, for example, within a 10 MHz or 20 MHz bandwidth. To be specific, the standard carrier of the LTE system simultaneously supports an ordinary LTE terminal and one or two of two new types of terminals.

In the third application scenario, maximum transmit power that can be used by the NBIOT system for transmitting a physical downlink channel may be lower, so that normal communication of the ordinary LTE terminal is not affected.

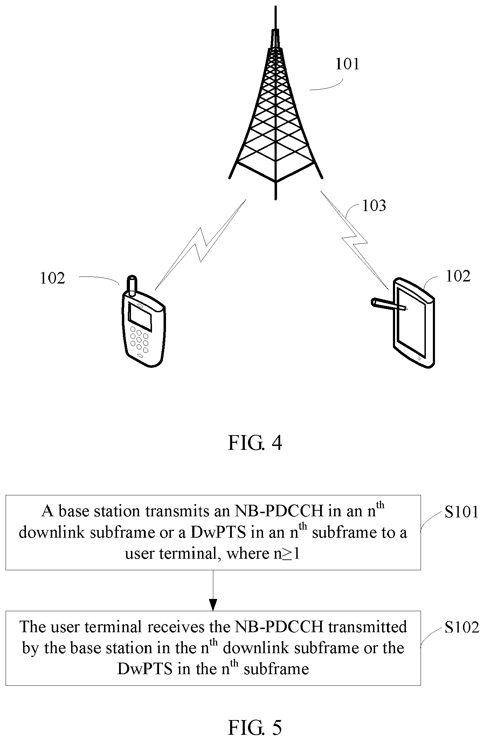

FIG. 4 is a schematic structural diagram of a communications system. Referring to FIG. 4, the communications system includes a base station 101 and one or more user terminals 102. The user terminal 102 communicates with the base station 101 by using a communications channel 103.

The user terminal 102 is a user terminal that supports a relatively narrow radio frequency bandwidth.

Optionally, the user terminal 102 supports uplink single-subcarrier SC-FDMA transmission with a 3.75 kHz orthogonal subcarrier spacing or uplink single-subchannel FDMA transmission with a 3.75 kHz subchannel bandwidth, or the user terminal 102 supports uplink single-subcarrier SC-FDMA transmission with a 15 kHz orthogonal subcarrier spacing, or the user terminal 102 supports uplink multi-subcarrier SC-FDMA transmission with a 15 kHz orthogonal subcarrier spacing.

The base station 101 has a function of scheduling a shared channel, and can establish scheduling based on a history of packet data transmitted to the user terminal 102. Scheduling means that when a plurality of user terminals 102 share a transmission resource, a mechanism is required to effectively allocate a physical-layer resource to obtain a statistical multiplexing gain.

The user terminal 102 transmits and receives data by using the communications channel 103 established with the base station 101. The user terminal 102 performs transmission or reception processing on the shared channel according to information transmitted by using a scheduling control channel. In addition, the user terminal 102 may be a mobile station, a mobile phone, a computer, a portable terminal, or the like. Moreover, types of the user terminals 102 may be the same or may be different.

The base station 101 and the user terminal 102 perform data reception and transmission by using the communications channel 103. The communications channel 103 may be a wireless communications channel. In addition, in the wireless communications channel, the communications channel 103 includes at least a shared channel and a scheduling control channel. The shared channel is shared by a plurality of user terminals 102 to transmit and receive packets. The scheduling control channel is used to transmit an allocation of the shared channel, a corresponding scheduling result, and the like.

**Embodiment 1**

FIG. 5 is a schematic flowchart of a physical downlink channel transmission method according to this embodiment of the present invention. The transmission method includes a transmitting method and a receiving method, and the transmission method is applied to a communications system as shown in FIG. 4.

S101. A base station transmits an NB-PDCCH in an $n^{th}$ downlink subframe or a DwPTS in an $n^{th}$ subframe to a user terminal, where $n \geq 1$.

S102. The user terminal receives the NB-PDCCH transmitted by the base station in the $n^{th}$ downlink subframe or the DwPTS in the $n^{th}$ subframe.

The NB-PDCCH in this embodiment of the present invention carries scheduling assignment information of an NB-PDSCH and other control information. The scheduling assignment information is used to schedule an NB-PDSCH carrying downlink data or a narrowband uplink shared channel NB-PUSCH carrying uplink data.

In step S101, the base station transmits the NB-PDCCH to the user terminal.

Specifically, when the base station transmits the NB-PDCCH to the user terminal, the base station maps the NB-PDCCH to an NB-PDCCH mapped basic element.

The NB-PDCCH mapped basic element includes a first frequency resource or a second frequency resource in a frequency domain and includes at least one OFDM symbol included in the $n^{th}$ downlink subframe or the downlink pilot timeslot DwPTS in the $n^{th}$ subframe in a time domain, a bandwidth of the first frequency resource is less than or equal to 180 kHz, and the second frequency resource is a frequency resource included in an RB.

Specifically, the NB-PDCCH mapped basic element includes a first NB-CCE and/or a second NB-CCE. The NB-PDCCH in this embodiment of the present invention is transmitted in one or two NB-CCEs.

A format of the NB-PDCCH in this embodiment of the present invention is shown in Table 5.

**Table 5**

| Format of the NB-PDCCH | Quantity of NB-CCEs |
| --- | --- |
| 0 | 1 |
| 1 | 2 |

In Table 5, when the format of the NB-PDCCH is 0, the NB-PDCCH is transmitted in one NB-CCE; or when the format of the NB-PDCCH is 1, the NB-PDCCH is transmitted in two NB-CCEs.

For ease of description, in this embodiment of the present invention, the NB-PDCCH in the format 0 is referred to as an NB-PDCCH in a first format, and the NB-PDCCH in the format 1 is referred to as an NB-PDCCH in a second format.

It should be noted that, in this embodiment of the present invention, that the NB-PDCCH is transmitted in one NB-CCE indicates that a quantity of REs occupied by the NB-PDCCH is the same as a quantity of available REs included in one NB-CCE.

Likewise, in this embodiment of the present invention, that the NB-PDCCH is transmitted in two NB-CCEs indicates that a quantity of REs occupied by the NB-PDCCH is the same as a quantity of available REs included in two NB-CCEs.

The available REs are remaining REs in the REs included in the NB-CCE, apart from REs occupied by a reference signal.

The reference signal includes a CRS and/or a CSI-RS (Channel State Information-Reference Signal, channel state information-reference signal).

In an in-band deployment scenario, the CRS includes a CRS used by an LTE system and a narrowband reference signal NB-RS used by an NBIOT system, and the CSI-RS includes a CSI-RS used by the LTE system or further includes a narrowband NB-CSI-RS used by the NBIOT system.

In an independent deployment or guard band deployment scenario, the CRS may include only a narrowband reference signal NB-RS used by the NBIOT system, and the CSI-RS may include only a narrowband NB-CSI-RS used by the NBIOT system.

Specifically, a downlink reference signal in the LTE system includes a CRS and a CSI-RS. The CRS is transmitted in all downlink subframes of a PDSCH supported by a cell, and is transmitted on one or more antenna ports.

A reference signal sequence $r_{l,n_s}(m)$ is defined as:

$$r_{l,n_s}(m) = \frac{1}{\sqrt{2}}\left(1 - 2 \cdot c(2m)\right) + j\frac{1}{\sqrt{2}}\left(1 - 2 \cdot c(2m+1)\right), \quad m = 0, 1, ..., 2N_{RB}^{max,DL} - 1,$$

where $N_{RB}^{max,DL}$ is a configured maximum downlink bandwidth, $n_s$ is a timeslot number in a radio frame (Radio Frame), $l$ is a number of an OFDM symbol in a timeslot, and $c(i)$ is a pseudo random sequence and is defined as a Gold sequence whose length is 31.

Specifically, an output sequence $c(n)$ whose length is $M_{PN}$ is defined as:

$$c(n) = \left(x_1(n + N_C) + x_2(n + N_C)\right)\mod 2,$$

$$x_1(n + 31) = \left(x_1(n + 3) + x_1(n)\right)\mod 2,$$

and

$$x_2(n + 31) = \left(x_2(n + 3) + x_2(n + 2) + x_2(n + 1) + x_2(n)\right)\mod 2,$$

where $n = 0, 1, ..., M_{PN}-1$, $N_C = 1600$, and mod is a modulo operator.

A first m sequence is initialized to $x_1(0) = 1$, $x_1(n) = 0$, $n = 1, 2, ..., 30$, and an initial value of a second m sequence

$$c_{\text{init}} = 2^{10} \cdot \left(7 \cdot \left(n_s + 1\right) + l + 1\right) \cdot \left(2 \cdot N_{\text{ID}}^{\text{cell}} + 1\right) + 2 \cdot N_{\text{ID}}^{\text{cell}} + N_{\text{CP}}.$$

is expressed as                                                                                                                                    When each OFDM starts, the second m sequence is initialized by using the initial value, and a CRS is generated, where $N_{\text{ID}}^{\text{cell}}$ is a physical layer cell identity and

$$N_{\text{CP}} = \begin{cases} 1 & \text{normal CP} \\ 0 & \text{extended CP} \end{cases}.$$

The reference signal sequence $r_{l,n_s}(m)$ is mapped to a complex-valued modulated symbol $a_{k,l}^{(p)}$, the modulation is a reference symbol in a timeslot $n_s$ on an antenna port $p$, and a mapping relationship is $a_{k,l}^{(p)} = r_{l,n_s}(m')$, where

$$k = 6m + \left(v + v_{\text{shift}}\right) \bmod 6,$$

$$l = \begin{cases} 0, N_{\text{symb}}^{\text{DL}} - 3 & p \in \{0, 1\} \\ 1 & p \in \{2, 3\} \end{cases},$$

$$m = 0, 1, \ldots, 2 \cdot N_{\text{RB}}^{\text{DL}} - 1,$$

and

$$m' = m + N_{\text{RB}}^{\text{max,DL}} - N_{\text{RB}}^{\text{DL}}.$$

Variables $v$ and $v_{\text{shift}}$ define positions of different reference signals in the frequency domain, where

$$v = \begin{cases} 0 & p = 0 \quad l = 0 \\ 3 & p = 0 \quad l \neq 0 \\ 3 & p = 1 \quad l = 0 \\ 0 & p = 1 \quad l \neq 0 \\ 3(n_s \bmod 2) & p = 2 \\ 3 + 3(n_s \bmod 2) & p = 3 \end{cases}.$$

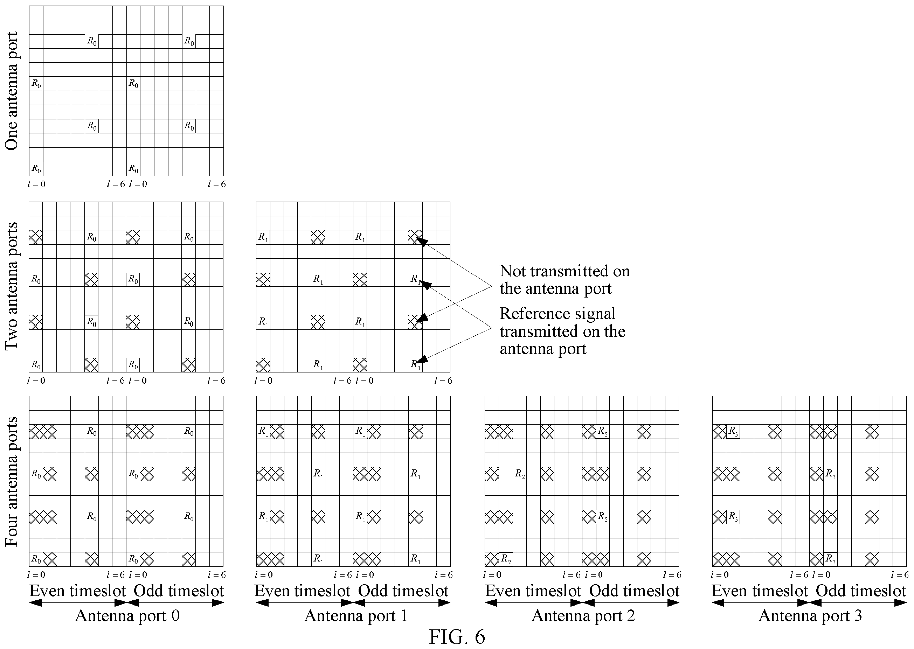

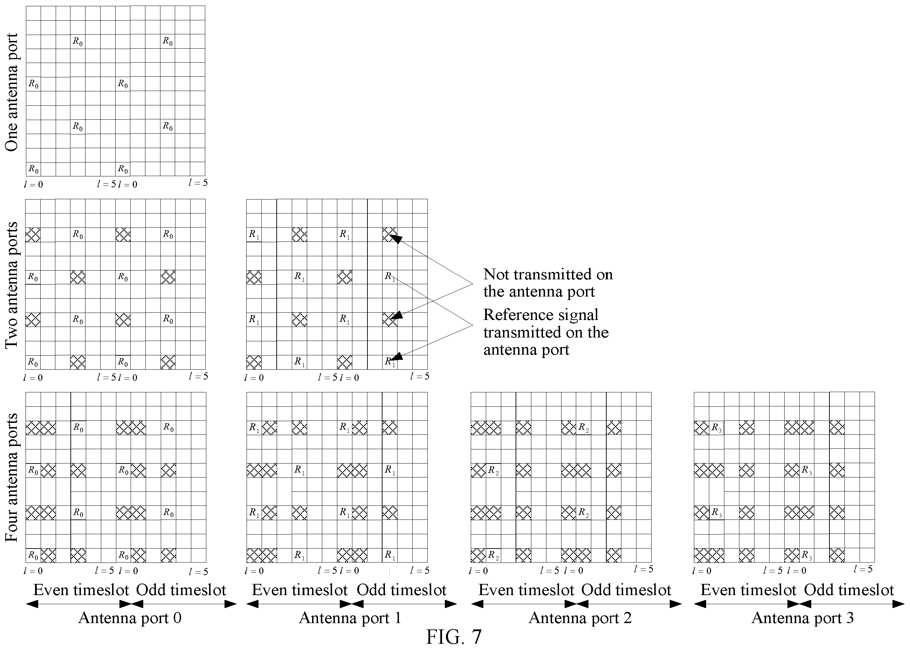

A cell-specific frequency shift satisfies $v_{\text{shift}} = N_{\text{ID}}^{\text{cell}}$ mod6, and mod is a modulo operator.
The foregoing mapping is represented in a graphic form. When a CP type of a downlink subframe is a normal CP, schematic structural diagrams of REs to which CRSs transmitted by one antenna port, two antenna ports, and four antenna ports are mapped are shown in FIG. 6. When a CP type of a downlink subframe is an extended CP, schematic structural diagrams of REs to which CRSs transmitted by one antenna port, two antenna ports, and four antenna ports are mapped are shown in FIG. 7.

Specifically, in this embodiment of the present invention, the NB-RS is transmitted in all downlink subframes of the NB-PDSCH supported by the cell or in DwPTSs in subframes including the DwPTSs, and the NB-RS is mapped and transmitted in only one RB.

Specifically, the NB-RS is transmitted on one antenna port or two antenna ports.

An NB-RS sequence $r_{l,n_s}(m)$ is defined as:

$$r_{l,n_s}(m) = \frac{1}{\sqrt{2}}\left(1 - 2 \cdot c(2m)\right) + j\frac{1}{\sqrt{2}}\left(1 - 2 \cdot c(2m+1)\right), \quad m = 0, 1, ..., 2N_{RB}^{max,DL} - 1,$$

where $N_{RB}^{max,DL}$ is a configured maximum downlink bandwidth, that is, $N_{RB}^{max,DL} = 1$; in the formula, $m=0,1$, $n_s$ is a timeslot number in a radio frame, and $l$ is a number of an OFDM symbol in a timeslot. $c(i)$ is a pseudo random sequence and is defined as a Gold sequence whose length is 31.

Specifically, an output sequence $c(n)$ whose length is $M_{PN}$ is defined as:

$$c(n) = \left(x_1(n + N_C) + x_2(n + N_C)\right) \bmod 2,$$

$$x_1(n + 31) = \left(x_1(n + 3) + x_1(n)\right) \bmod 2,$$

and

$$x_2(n + 31) = \left(x_2(n + 3) + x_2(n + 2) + x_2(n + 1) + x_2(n)\right) \bmod 2,$$

where $n=0,1,...,M_{PN}-1$, $N_C=1600$, and mod is a modulo operator.

A first m sequence is initialized to $x_1(0) = 1$, $x_1(n)=0$, $n=1,2,...,30$, and an initial value of a second m sequence is a value determined by a function including an input parameter that is at least one of a physical layer cell identity and a cyclic prefix type. For example, the initial value is

$$c_{init} = 2^{10} \cdot \left(7 \cdot (n_s + 1) + l + 1\right) \cdot \left(2 \cdot N_{ID}^{cell} + 1\right) + 2 \cdot N_{ID}^{cell} + N_{CP} \cdot$$

When each OFDM starts, the second m sequence is initialized by using the initial value, and an NB-RS is generated, where $N_{ID}^{cell}$ is the physical layer cell identity and

$$N_{CP} = \begin{cases} 1 & \text{normal CP} \\ 0 & \text{extended CP} \end{cases}.$$

The reference signal sequence $r_{l,n_s}(m)$ is mapped to a complex-valued modulated symbol $a_{k,l}^{(p)}$, the modulated symbol is a reference symbol in a timeslot $n_s$ on an antenna port $p$, and a mapping relationship is

$$a_{k,l}^{(p)} = r_{l,n_s}(m') ,$$

$$m = 0, 1, ..., 2 \cdot N_{RB}^{DL} - 1, \qquad m' = m + N_{RB}^{max,DL} - N_{RB}^{DL},$$

where $k = 6m + (v + v_{shift}) \bmod 6$, $l = 2$, and

$$N_{symb}^{DL} - 1, \qquad \text{or } l = 2, \text{ and} \qquad N_{symb}^{DL} - 2.$$

When the cyclic prefix is a normal cyclic prefix, $l = 3$, and $N_{symb}^{DL} - 1$, or $l = 3$, and $N_{symb}^{DL} - 2$.

Variables $v$ and $v_{shift}$ define positions of different reference signals in the frequency domain, where

$$v = \begin{cases} 0 & p = 0 \text{ and } l = 0 \\ 3 & p = 0 \text{ and } l \neq 0 \\ 3 & p = 1 \text{ and } l = 0 \\ 0 & p = 1 \text{ and } l \neq 0 \end{cases}.$$

$$v_{shift} = N_{ID}^{cell} \bmod 6.$$

A cell-specific frequency shift satisfies

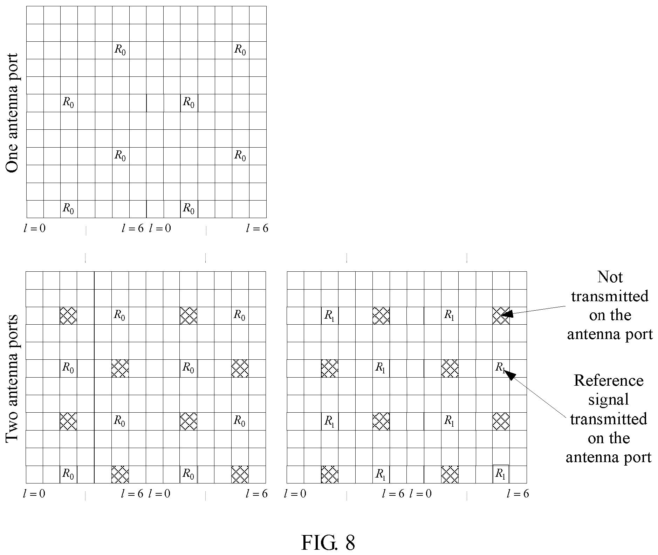

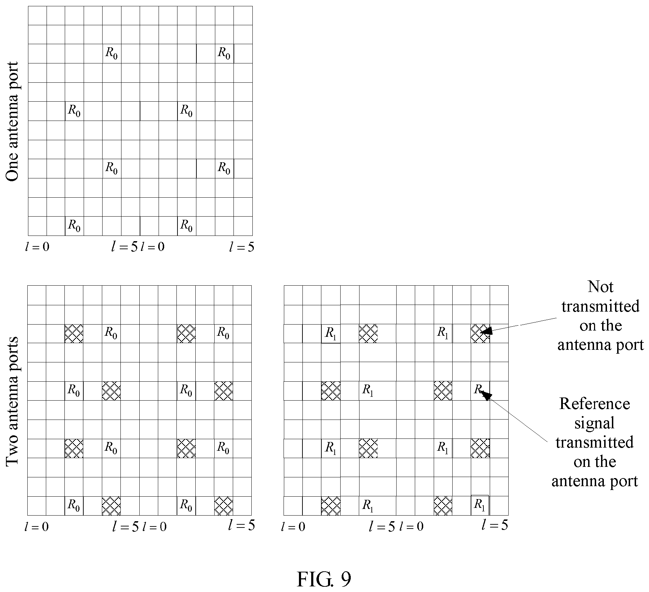

The foregoing mapping is represented in a graphic form. If the CP is a normal CP, schematic diagrams of NB-RS mappings of one antenna port and two antenna ports are shown in FIG. 8, where $l = 2$, and $N_{symb}^{DL} - 2$. If the CP is an extended CP, schematic diagrams of NB-RS mappings of one antenna port and two antenna ports are shown in FIG. 9, where

$$l = 2, \text{ and } N_{symb}^{DL} - 2.$$

Specifically, in this embodiment of the present invention, both the first NB-CCE and the second NB-CCE include m REs.

The m REs include x*y REs, x represents a quantity of consecutive orthogonal frequency division multiplexing OFDM symbols in the $n^{th}$ downlink subframe or the DwPTS in the $n^{th}$ subframe in the time domain, y represents a quantity of subcarriers in the frequency domain and corresponding to each OFDM symbol in the $n^{th}$ downlink subframe or the DwPTS in the $n^{th}$ subframe, x>1, and $12 \geq y \geq 1$.

Specifically, if the $n^{th}$ downlink subframe or the $n^{th}$ subframe including the DwPTS is a subframe for transmitting a narrowband physical broadcast channel NB-PBCH, a narrowband primary synchronization signal NB-PSS, or a narrowband secondary synchronization signal NB-SSS, the x OFDM symbols are first three or five consecutive OFDM symbols after all OFDM symbols in the $n^{th}$ downlink subframe or the DwPTS in the $n^{th}$ subframe in the time domain are arranged in ascending time order.

Specifically, if the $n^{th}$ downlink subframe or the $n^{th}$ subframe including the DwPTS is a subframe for transmitting a narrowband physical broadcast channel NB-PBCH or a narrowband primary synchronization signal NB-PSS, the x OFDM symbols are first three consecutive OFDM symbols after all OFDM symbols in the $n^{th}$ downlink subframe or the DwPTS in the $n^{th}$ subframe in the time domain are arranged in ascending time order.

If the $n^{th}$ downlink subframe or the $n^{th}$ subframe including the DwPTS is a subframe for transmitting a narrowband secondary synchronization signal NB-SSS, the x OFDM symbols are first three or five consecutive OFDM symbols after all OFDM symbols in the $n^{th}$ downlink subframe or the DwPTS in the $n^{th}$ subframe in the time domain are arranged in ascending time order.

In the in-band deployment scenario, x represents a quantity of consecutive OFDM symbols from a $(p+1)^{th}$ OFDM symbol to a last OFDM symbol after all OFDM symbols in the $n^{th}$ downlink subframe or the DwPTS in the $n^{th}$ subframe in the time domain are arranged in ascending time order, where p is a preset value, or p is a value carried in the NB-PBCH or system information by the base station, and $4 \geq p \geq 0$.

Control channels of the LTE system that are transmitted by the base station in first p consecutive OFDM symbols include at least one of a PDCCH, a PCFICH (Physical Control Format Indicator Channel, physical control information format channel) and a PHICH (Physical Hybrid ARQ Indicator Channel, physical hybrid automatic repeat indicator channel).

Optionally, a value of p is a preset value, and p is equal to 3 or 4. Presetting means explicitly specifying in a standard text.

In the independent deployment scenario or the guard band deployment scenario, in this embodiment of the present invention, x represents a quantity of consecutive OFDM symbols from a first OFDM symbol to a last OFDM symbol after all OFDM symbols in the $n^{th}$ downlink subframe or the DwPTS in the $n^{th}$ subframe in the time domain are arranged in ascending time order.

Specifically, when the downlink is a normal CP, the x OFDM symbols are 14 OFDM symbols included in the $n^{th}$ downlink subframe.

When the downlink is a normal CP, in the DwPTS in the $n^{th}$ subframe, a value of x is determined by a special subframe configuration in Table 3. For example, when the special subframe configuration is 0 or 5, the value of x is 3; when the special subframe configuration is 1 or 6, the value of x is 9; when the special subframe configuration is 2 or 7, the value of x is 10; when the special subframe configuration is 3 or 8, the value of x is 11; or when the special subframe configuration is 4, the value of x is 12.

When the downlink is an extended CP, the x OFDM symbols are 12 OFDM symbols included in the $n^{th}$ downlink subframe.

When the downlink is an extended CP, in the DwPTS in the $n^{th}$ subframe, the value of x is determined by a special subframe configuration in Table 3. For example, when the special subframe configuration is 0 or 4, the value of x is 3; when the special subframe configuration is 1 or 5, the value of x is 8; when the special subframe configuration is 2 or 6, the value of x is 9; or when the special subframe configuration is 3, the value of x is 10.

In this embodiment of the present invention, each OFDM symbol in the m REs of the first NB-CCE or the second NB-CCE includes six consecutive subcarriers, the six consecutive subcarriers included in each OFDM symbol in the m REs of the first NB-CCE do not overlap the six consecutive subcarriers included in each OFDM symbol in the m REs of the second NB-CCE, and indexes of the six subcarriers included in each OFDM symbol of the first NB-CCE or the second NB-CCE are the same or change according to a first preset rule.

Specifically, if $k$ is an index of a subcarrier in an RB, and $l$ is an index of an OFDM symbol in a timeslot, all REs included in the first NB-CCE and the second NB-CCE may be indicated by $(k, l)$.

In a scenario in which the indexes of the six subcarriers included in each OFDM symbol of the first NB-CCE or the second NB-CCE are the same, if a system downlink configuration is a normal CP, REs included in the first NB-CCE are $(k,l)$, where $k = 0, 1, 2, 3, 4, 5$ and $l = 0, 1, 2, 3, 4, 5, 6$; and REs included in the second NB-CCE are $(k,l)$, where $k = 6, 7, 8, 9, 10, 11$ and $l = 0, 1, 2, 3, 4, 5, 6$.

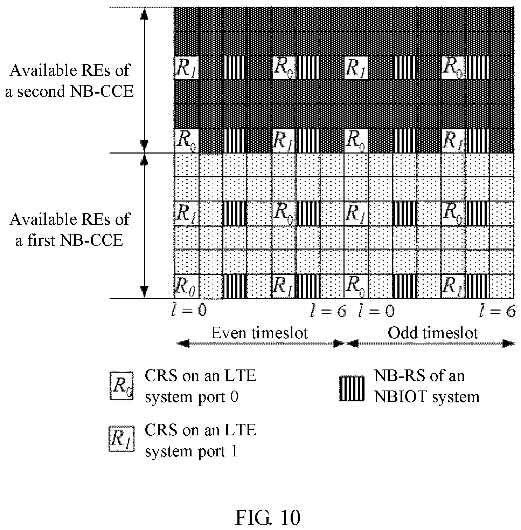

For example, in a scenario in which the indexes of the six subcarriers included in each OFDM symbol of the first NB-CCE or the second NB-CCE are the same, if the system downlink configuration is a normal CP, FIG. 10 shows a resource mapping structure when a CRS on a single antenna port or CRSs on two antenna ports are configured in the LTE system and NB-RSs on two antenna ports are configured in the NBIOT system.

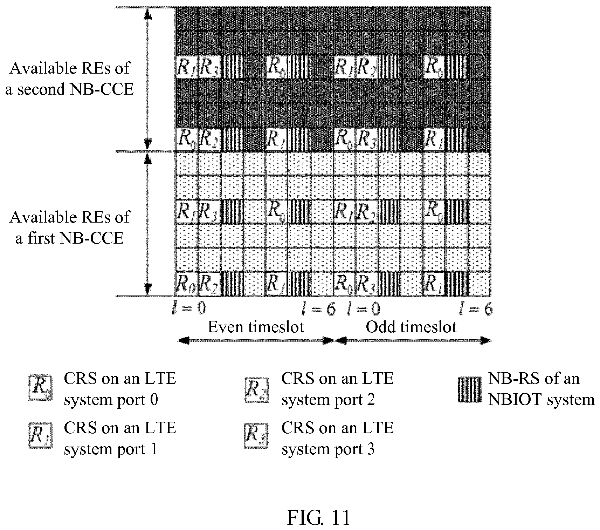

In a scenario in which the indexes of the six subcarriers included in each OFDM symbol of the first NB-CCE or the second NB-CCE are the same, if the system downlink configuration is a normal CP, FIG. 11 shows a resource mapping structure when CRSs on four antenna ports are configured in the LTE system and NB-RSs on two antenna ports are configured in the NBIOT system.

Likewise, in a scenario in which the indexes of the six subcarriers included in each OFDM symbol of the first NB-CCE or the second NB-CCE are the same, if the system downlink configuration is an extended CP, resource REs included in the first NB-CCE are $(k,l)$, where $k = 0, 1, 2, 3, 4, 5$ and $l = 0, 1, 2, 3, 4, 5$; and REs included in the second NB-CCE are $(k,l)$, where $k = 6, 7, 8, 9, 10, 11$ and $l = 0, 1, 2, 3, 4, 5$.

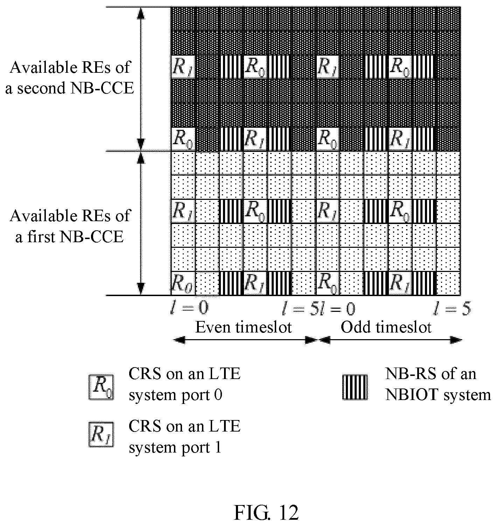

For example, in a scenario in which the indexes of the six subcarriers included in each OFDM symbol of the first NB-CCE or the second NB-CCE are the same, if the system downlink configuration is an extended CP, FIG. 12 shows a resource mapping structure when a CRS on a single antenna port or CRSs on two antenna ports are configured in the LTE system and NB-RSs on two antenna ports are configured in the NBIOT system.

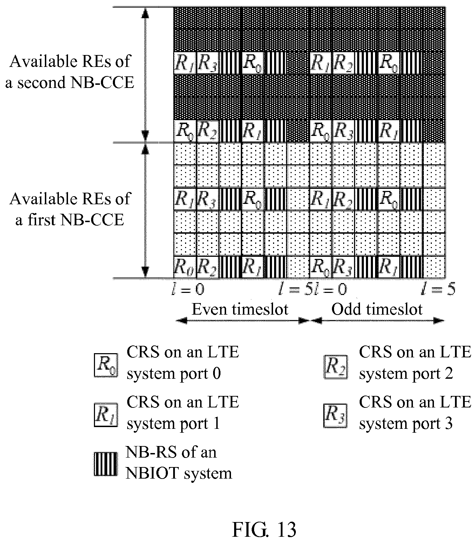

In a scenario in which the indexes of the six subcarriers included in each OFDM symbol of the first NB-CCE or the second NB-CCE are the same, if the system downlink configuration is an extended CP, FIG. 13 shows a resource mapping structure when CRSs on four antenna ports are configured in the LTE system and NB-RSs on two antenna ports are configured in the NBIOT system.

The first preset rule in this embodiment of the present invention is that the indexes of the six subcarriers included in each OFDM symbol of the first NB-CCE or the second NB-CCE change at intervals of one OFDM symbol, or that the indexes of the six subcarriers included in each OFDM symbol of the first NB-CCE or the second NB-CCE are determined according to a preset formula.

Specifically, if the first preset rule is that the indexes of the six subcarriers included in each OFDM symbol of the first NB-CCE or the second NB-CCE change at intervals of one OFDM symbol, in a scenario in which the system downlink configuration is a normal CP, REs included in the first NB-CCE are $(k,l)$, where for the first NB-CCE, in a first timeslot, $k=0,1,2,3,4,5$ and $l=0,2,4,6$ , and in a second timeslot, $k = 0,1, 2, 3, 4, 5$ and $l=1,3,5$; and REs included in the second NB-CCE are $(k, l)$, where for the second NB-CCE, in the first timeslot, $k = 6, 7, 8, 9,10,11$ and $l=1, 3, 5$ , and in the second timeslot, $k = 6, 7, 8, 9,10,11$ and $l=0,2,4,6$.

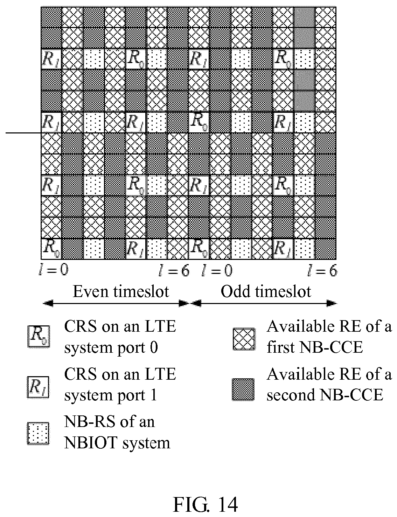

For example, in a scenario in which the indexes of the six subcarriers included in each OFDM symbol of the first NB-CCE or the second NB-CCE change at intervals of one OFDM symbol, if the system downlink configuration is a normal CP, FIG. 14 shows a resource mapping structure when a CRS on a single antenna port or CRSs on two antenna ports are configured in the LTE system and NB-RSs on two antenna ports are configured in the NBIOT system.

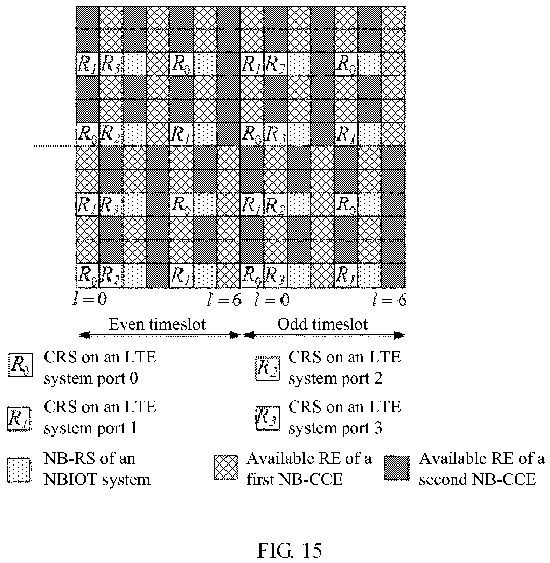

In a scenario in which the indexes of the six subcarriers included in each OFDM symbol of the first NB-CCE or the second NB-CCE change at intervals of one OFDM symbol, if the system downlink configuration is a normal CP, FIG. 15 shows a resource mapping structure when CRSs on four antenna ports are configured in the LTE system and NB-RSs on two antenna ports are configured in the NBIOT system.

Likewise, if the first preset rule is that the indexes of the six subcarriers included in each OFDM symbol of the first NB-CCE or the second NB-CCE change at intervals of one OFDM symbol, in a scenario in which the system downlink configuration is an extended CP, resource REs included in the first NB-CCE are $(k,l)$, where for the first NB-CCE, in the first timeslot, $k = 0,1, 2, 3, 4, 5$ and $l = 0,2,4$, and in the second timeslot, $k = 0,1, 2, 3, 4, 5$ and $l = 1,3,5$; and a resource set included in the second NB-CCE is $(k,l)$, where for the second NB-CCE, in the first timeslot, $k = 6, 7, 8, 9,10,11$ and $l = 1,3,5$, and in the second timeslot, $k = 6, 7, 8, 9,10,11$ and $l = 0,2,4$.

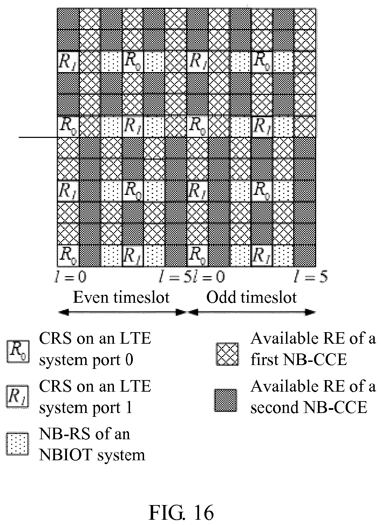

For example, in a scenario in which the indexes of the six subcarriers included in each OFDM symbol of the first NB-CCE or the second NB-CCE change at intervals of one OFDM symbol, if the system downlink configuration is an extended CP, FIG. 16 shows a resource mapping structure when a CRS on a single antenna port or CRSs on two antenna ports are configured in the LTE system and NB-RSs on two antenna ports are configured in the NBIOT system.

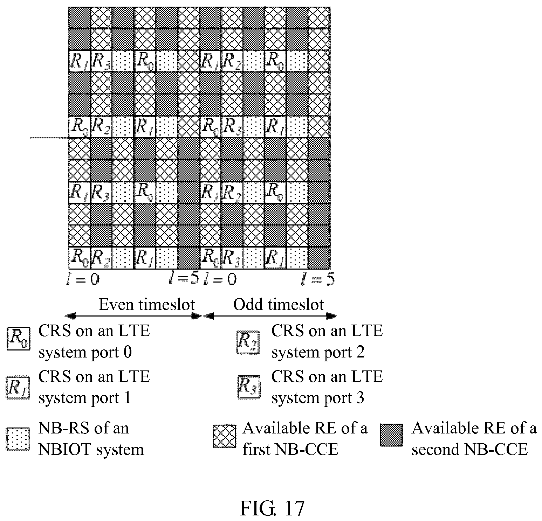

In a scenario in which the indexes of the six subcarriers included in each OFDM symbol of the first NB-CCE or the second NB-CCE change at intervals of one OFDM symbol, if the system downlink configuration is an extended CP, FIG. 17 shows a resource mapping structure when CRSs on four antenna ports are configured in the LTE system and NB-RSs on two antenna ports are configured in the NBIOT system.

Specifically, if the first preset rule is that the indexes of the six subcarriers included in each OFDM symbol of the first NB-CCE or the second NB-CCE are determined according to a preset formula, the preset formula may be expressed as $6 \times (Y_l \bmod 2)+i$, where $i=0, 1, ..., 5$, and mod is a modulo operator. A variable $Y_l$ is defined as $Y_l=(A \cdot Y_{l-1}) \bmod D$, $Y_{-1}=n_{RNTI}$, $n_{RNTI} \neq 0$, $n_{RNTI}$ is a value of an RNTI (Radio Network Temporary Identifier, radio network temporary identifier) of the user terminal, $A$ and $D$ are prime numbers, for example, $A=39827$, and $D=65537$, and $l$ is a number of an OFDM symbol in a timeslot. The RNTI of the user terminal is a C-RNTI (Cell Radio Network Temporary Identifier, cell radio network temporary identifier), an SPS (Semi-Persistent Scheduling, semi-persistent scheduling) C-RNTI, or a temporary C-RNTI.

For the NB-PDCCH in the first format, the base station maps the NB-PDCCH in the first format to available REs in a first resource element group or available REs in a second resource element group, where the available REs are REs that do not include any reference signal.

The first resource element group includes all REs of the first NB-CCE, and the second resource element group includes all REs of the second NB-CCE; or

the first resource element group includes all REs of the first NB-CCE and all REs of the second NB-CCE in a first timeslot in the n^th downlink subframe, and the second resource element group includes all REs of the first NB-CCE and all REs of the second NB-CCE in a second timeslot in the n^th downlink subframe.

It can be easily understood that if the n^th subframe includes the first NB-CCE and the second NB-CCE, if an NB-PDCCH in the first format needs to be transmitted in the n^th subframe, the base station maps the NB-PDCCH in the first format to available REs of the first NB-CCE or available REs of the NB-CCE.

Simply, if two NB-PDCCHs need to be transmitted in the n^th subframe, the base station determines an NB-CCE, to transmit, in available REs of the NB-CCE, each NB-PDCCH that needs to be transmitted.

Particularly, the base station may determine an NB-CCE according to a rule, to transmit, in available REs of the NB-CCE, an NB-PDCCH that needs to be transmitted to the user terminal.

For example, an index of the NB-PDCCH mapped to the first or second NB-CCE and transmitted by the base station to the user terminal is determined by $(Y_k + m) \bmod 2$. For example, when a result of $(Y_k+m) \bmod 2$ calculation is 0, the NB-PDCCH transmitted by the base station to the user terminal is mapped to the available REs of the first NB-CCE; or when a result of $(Y_k+m) \bmod 2$ calculation is 1, the NB-PDCCH transmitted by the base station to the user terminal is mapped to the available REs of the second NB-CCE. A variable $Y_k$ is defined as $Y_k=(A \cdot Y_{k-1}) \bmod D$, $Y_{-1}=n_{RNTI}$, $n_{RNTI} \neq 0$, $n_{RNTI}$ is a value of the RNTI of the user terminal, $A$ and $D$ are prime numbers, for example, $A=39827$, and $D=65537$,

and $k=\lfloor n_s/2 \rfloor$, where $n_s$ is a number of a timeslot in a radio frame. The RNTI of the user terminal is a C-RNTI, an SPS C-RNTI, or a temporary C-RNTI.

Further, before the base station maps the NB-PDCCH in the first format to the available REs in the first resource element group or the available REs in the second resource element group, the base station performs scrambling, modulation, layer mapping, and precoding processing on a first to-be-transmitted bit block to generate a first vector block, and performs a permutation (Permutation) on the first vector block to generate a first to-be-transmitted symbol sequence, where the first to-be-transmitted bit block is a to-be-transmitted bit block in the NB-PDCCH in the first format.

In this way, the base station maps the first to-be-transmitted symbol sequence to the available REs in the first resource element group or the available REs in the second resource element group.

It should be noted that, the base station transmits up to two NB-PDCCHs in the first format in a subframe. The two NB-PDCCHs in the first format may be transmitted to a same user terminal, or may be transmitted to different user terminals.

When the base station transmits two NB-PDCCHs in the first format in a subframe, first to-be-transmitted bit blocks respectively carried by the two NB-PDCCHs in the first format are first multiplexed (Multiplexed), and then scrambling, modulation, layer mapping, and precoding processing are performed on a bit block obtained through multiplexing to generate a first vector block, and a permutation (Permutation) is performed on the first vector block to generate a first to-be-transmitted symbol sequence. In this way, the base station maps the first to-be-transmitted symbol sequence to the available REs in the first resource element group and the available REs in the second resource element group.

For example, $$b^{(i)}(0),...,b^{(i)}(M_{\mathrm{bit}}^{(i)}-1)$$ is a to-be-transmitted bit block in the NB-PDCCH in the first format in the $n^{\text{th}}$ subframe, where $$M_{\mathrm{bit}}^{(i)}$$ is a quantity of bits transmitted in an $i^{\text{th}}$ NB-PDCCH in the $n^{\text{th}}$ subframe. To-be-transmitted bit blocks in all NB-PDCCHs are multiplexed (Multiplexed) to generate a bit block

$$b^{(0)}(0),...,b^{(0)}(M_{\mathrm{bit}}^{(0)}-1),b^{(1)}(0),...,b^{(1)}(M_{\mathrm{bit}}^{(1)}-1),\ ......,\ b^{(n_{\mathrm{PDCCH}}-1)}(0),...,b^{(n_{\mathrm{PDCCH}}-1)}(M_{\mathrm{bit}}^{(n_{\mathrm{PDCCH}}-1)}-1)$$

, where $n_{\mathrm{PDCCH}}$ is a quantity of NB-PDCCHs in the $n^{\text{th}}$ subframe. In the NBIOT system, $n_{\mathrm{PDCCH}}$ is equal to 1 or 2.

Optionally, before modulation, the bit block obtained through multiplexing is scrambled by using a narrowband reference signal NB-RS of the NBIOT system, and a scrambled bit block $\tilde{b}(0),...,\tilde{b}(M_{\mathrm{tot}}-1)$ is formed. The NB-RS used in the scrambling process in this embodiment of the present invention is the same as the NB-RS in the NBIOT system described above. Details are not further described herein.

The scrambling process is $\tilde{b}(i)=(b(i)+c(i))\mathrm{mod}2$, where $c(i)$ is a scrambling sequence, a scrambling sequence generator performs initialization at a start of each subframe, and an initial value is $$c_{\mathrm{init}} = \lfloor n_{\mathrm{s}}/2 \rfloor 2^9 + N_{\mathrm{ID}}^{\mathrm{cell}}$$.

The scrambled bit block $\tilde{b}(0),...,\tilde{b}(M_{\mathrm{tot}}-1)$ undergoes a process of QPSK (Quadrature Phase Shift Keying, quadrature phase shift keying) modulation, layer mapping, and precoding, and a vector block $y(i)=[y^{(0)}(i) \cdots y^{(P-1)}(i)]^T$ is generated, where $i=0,...,M_{\mathrm{symb}}-1$. The vector block is mapped to a resource element of the antenna port $p$, where $y^{(p)}(i)$ indicates a signal of the antenna port $p$.

After the vector block is mapped to the resource element, a permutation (Permutation) is performed on the vector block to generate a to-be-transmitted symbol sequence, where the to-be-transmitted symbol sequence is indicated by a symbol pair or a symbol quadruple.

Specifically, when a symbol pair is used for mapping, $z^{(p)}(i)=\langle y^{(p)}(2i),y^{(p)}(2i+1)\rangle$ indicates a symbol pair $i$ on the antenna port $p$, and a symbol pair block is indicated by $z^{(p)}(0),....,z^{(p)}(M_{\mathrm{quad}}-1)$, where $w^{(p)}(0),...,w^{(p)}(M_{\mathrm{quad}}-1)$ is formed after a permutation is performed on $M_{\mathrm{quad}}=M_{\mathrm{symb}}/2$. The permutation is formed by interleaving of sub blocks.

Optionally, $w^{(p)}(0),...,w^{(p)}(M_{\mathrm{quad}}-1)$ may be first mapped in the first NB-CCE and then mapped in the second NB-CCE sequentially. In the first NB-CCE or the second NB-CCE, mapping is performed first in the frequency domain and then in the time domain sequentially, and the mapping is not performed on a reference signal. It should be noted that, the reference signal is a narrowband reference signal NB-RS of the NBIOT system. In the in-band deployment scenario, the reference signal further includes a CRS and/or a CSI-RS of the LTE system. Optionally, in the in-band deployment scenario, when a CSI-RS of the LTE system exists within a bandwidth of the NBIOT system, the CSI-RS, instead of a symbol carrying the NB-PDCCH, is transmitted in REs corresponding to the CSI-RS.

When a symbol quadruple is used for mapping, a symbol quadruple $i$ on the antenna port $p$ is indicated by $z^{(p)}(i)=\langle y^{(p)}(4i),y^{(p)}(4i+1),y^{(p)}(4i+2),y^{(p)}(4i+3)\rangle$, and a symbol quadruple block is indicated by $z^{(p)}(0),...,z^{(p)}(M_{\mathrm{quad}}-1)$ where $w^{(p)}(0),...,w^{(p)}(M_{\mathrm{quad}}-1)$ is formed after a permutation is performed on $M_{\mathrm{quad}}=M_{\mathrm{symb}}/4$. Likewise, $w^{(p)}(0),...,w^{(p)}(M_{\mathrm{quad}}-$

1) is mapped first in the frequency domain and then in the time domain sequentially, and is not mapped to a reference signal. It should be noted that, the reference signal is a narrowband reference signal NB-RS of the NBIOT system. In the in-band deployment scenario, the reference signal further includes a CRS and/or a CSI-RS of the LTE system. Optionally, in the in-band deployment scenario, when a CSI-RS of the LTE system exists within a bandwidth of the NBIOT system, the CSI-RS, instead of a symbol carrying the NB-PDCCH, is transmitted in REs corresponding to the CSI-RS.

For the NB-PDCCH in the second format, the base station maps the NB-PDCCH in the second format to available REs in a first resource element group and available REs in a second resource element group, where the available REs are REs that do not include any reference signal.

Optionally, the base station may map the NB-PDCCH in the second format to available REs of the first NB-CCE and available REs of the second NB-CCE sequentially; or map the NB-PDCCH in the second format to available REs of each symbol in the $n^{th}$ downlink subframe or the DwPTS in the $n^{th}$ subframe sequentially.

Further, before the base station maps the NB-PDCCH in the second format to the available REs in the first resource element group and the available REs in the second resource element group, the base station further performs scrambling, modulation, layer mapping, and precoding processing on a second to-be-transmitted bit block to generate a second vector block, and performs a permutation on the second vector block to generate a second to-be-transmitted symbol sequence, where the second to-be-transmitted bit block is a to-be-transmitted bit block in the NB-PDCCH in the second format.

For example, for the NB-PDCCH in the second format, if the to-be-transmitted bit block in the NB-PDCCH in

$$b^{(i)}(0),...,b^{(i)}(M_{bit}^{(i)}-1) \qquad b^{(i)}(0),...,b^{(i)}(M_{bit}^{(i)}-1)$$

the second format in the $n^{th}$ subframe is , after bit

undergoes a process of scrambling, modulation, layer mapping, and precoding, a vector block is generated, where the vector block is $y(i) =[y^{(0)}(i) \ ... \ y^{(P-1)}(i)]^T$, and $i=0,...,M_{symb}-1$. The base station maps the vector block $y(i)=[y^{(0)}(i) \ ... \ y^{(P-1)}(i)]^T$ according to the following methods:

1. The base station maps the vector block $y(i)=[y^{(0)}(i) \cdots y^{(P-1)}(i)]^T$ to the available REs of the first NB-CCE and the second NB-CCE sequentially by first mapping to the first NB-CCE0 and then mapping to the NB-CCE 1.

2. The base station maps the vector block $y(i)=[y^{(0)} \cdots y^{(P-1)}(i)]^T$ first in the frequency domain and then in the time domain sequentially. To be specific, mapping is started from a first available RE in a first symbol, and all available REs in the first symbol are mapped, mapping is started from a second OFDM symbol.

3. The base station performs a permutation on the vector block $y(i)=[y^{(0)}(i) \cdots y^{(P-1)}(i)]^T$ in a form of a symbol pair or a symbol quadruple to form $w^{(p)}(0),..., w^{(p)}(M_{quad}-1)$. The base station maps $w^{(p)}(0),...,w^{(p)}(M_{quad}-1)$ first to the first NB-CCE and then to the second NB-CCE sequentially or first in the frequency domain and then in the time domain sequentially, and does not map $w^{(p)}(0),...,w^{(p)}(M_{quad}-1)$ to a reference signal. It should be noted that, the reference signal is a narrowband reference signal NB-RS of the NBIOT system. In the in-band deployment scenario, the reference signal further includes a CRS and/or a CSI-RS of the LTE system. Optionally, in the in-band deployment scenario, when a CSI-RS of the LTE system exists within a bandwidth of the NBIOT system, the CSI-RS, instead of a symbol carrying the NB-PDCCH, is transmitted in REs corresponding to the CSI-RS.

Specifically, in this embodiment of the present invention, the user terminal performs step S102, that is, the user terminal receives the NB-PDCCH transmitted by the base station in the $n^{th}$ downlink subframe or the DwPTS in the $n^{th}$ subframe.

In this embodiment of the present invention, if the NB-PDCCH is the NB-PDCCH in the first format, one or two NB-PDCCH candidates exist in the $n^{th}$ downlink subframe or the DwPTS in the $n^{th}$ subframe in the communications system. If the NB-PDCCH is the NB-PDCCH in the second format, one NB-PDCCH candidate exists in the $n^{th}$ downlink subframe or the DwPTS in the $n^{th}$ subframe in the communications system.

Specifically, if the NB-PDCCH is the NB-PDCCH in the first format, the user terminal monitors a first NB-PDCCH candidate and/or a second NB-PDCCH candidate in the $n^{th}$ downlink subframe or the DwPTS in the $n^{th}$ subframe. The first NB-PDCCH candidate or the second NB-PDCCH candidate includes m REs.

That is, the NB-PDCCH in the first format is mapped to available REs of the first NB-PDCCH candidate or available REs of the second NB-PDCCH candidate, and the available REs are REs that do not include any reference signal.

The first NB-PDCCH candidate includes all REs of the first NB-CCE, and the second NB-PDCCH candidate includes all REs of the second NB-CCE; or

the first NB-PDCCH candidate includes all REs of the first NB-CCE and all REs of the second NB-CCE in a first timeslot in the $n^{th}$ downlink subframe, and the second NB-PDCCH candidate includes all REs of the first NB-CCE and all REs of the second NB-CCE in a second timeslot in the $n^{th}$ downlink subframe.

Specifically, if the NB-PDCCH is the NB-PDCCH in the second format, the NB-PDCCH in the second format is mapped to available REs of the first NB-CCE and available REs of the second NB-CCE, and the available REs are REs that do not include any reference signal.

Further, the physical downlink channel transmission method provided by this embodiment of the present invention further includes: if the base station transmits a narrowband physical broadcast channel NB-PBCH or a narrowband synchronization signal NB-SS in an $(n+a)^{th}$ or $(n-a)^{th}$ downlink subframe, the base station transmits the NB-PDCCH in blank symbols in the $(n+a)^{th}$ or $(n-a)^{th}$ downlink subframe.

The $(n+a)^{th}$ downlink subframe is a first downlink subframe or a first subframe including a DwPTS after the $n^{th}$ downlink subframe or the $n^{th}$ subframe including the DwPTS, the $(n-a)^{th}$ downlink subframe is a first downlink subframe or a first subframe including a DwPTS before the $n^{th}$ downlink subframe or the $n^{th}$ subframe including the DwPTS, the blank symbols are first b consecutive OFDM symbols after all OFDM symbols in the downlink subframe for transmitting the NB-PBCH or the NB-SS are arranged in ascending time order, a>0, b is equal to 3 or 5, and the NB-SS includes a narrowband primary synchronization signal NB-PSS or a narrowband secondary synchronization signal NB-SSS.

With respect to an $i^{th}$ OFDM symbol in the blank symbols, the NB-PDCCH mapped to an $i^{th}$ OFDM symbol after all OFDM symbols in the $n^{th}$ downlink subframe or the $n^{th}$ subframe including the DwPTS are arranged in ascending time order is repeatedly transmitted in the $i^{th}$ OFDM symbol, and $i \leq 5$.

It may be understood that, because a type-2 frame structure includes a downlink subframe, a special subframe, and an uplink subframe, there is a scenario in which a downlink subframe and an uplink subframe are adjacent in the type-2 frame structure. The method provided by this embodiment of the present invention is intended for the downlink subframe. Therefore, in the type-2 frame structure, the $(n+a)^{th}$ downlink subframe or the $(n-a)^{th}$ downlink subframe may be a subframe that is not adjacent to the $n^{th}$ downlink subframe.

In other words, consecutive subframes in this embodiment of the present invention are any two adjacent downlink subframes.

In the independent deployment scenario or the guard band deployment scenario, a reference signal in each subframe is only an NB-RS. In the subframe for transmitting the NB-PBCH, the NB-PBCH is not transmitted in first three OFDM symbols. In the subframe for transmitting the NB-PSS, when a system configuration is a normal CP, last 11 OFDM symbols in the subframe are used for transmitting the NB-PSS, that is, the NB-PSS is not transmitted in first three OFDM symbols. In the subframe for transmitting the NB-SSS, when the system configuration is a normal CP, last 11 or 9 OFDM symbols in the subframe are used for transmitting the NB-SSS, that is, the NB-SSS is not transmitted in first three or five OFDM symbols.

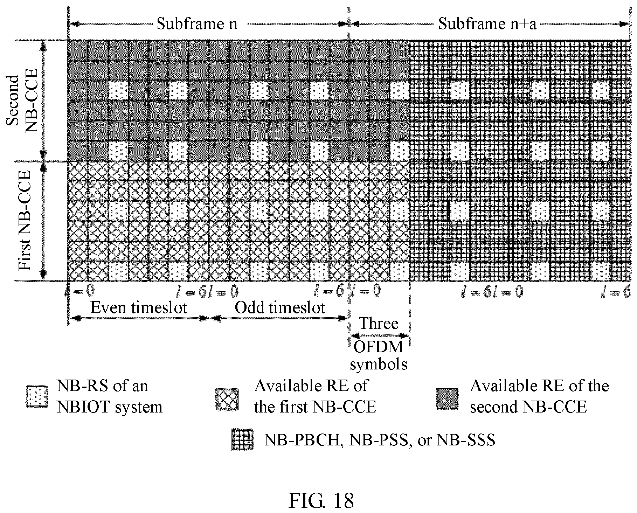

For example, as shown in FIG. 18, if a downlink subframe n is a subframe for transmitting an NB-PDCCH and the NB-PDCCH is transmitted in two or more subframes, and if a next downlink subframe n+a is a subframe for transmitting an NB-PBCH, an NB-PSS, or an NB-SSS, the base station transmits the NB-PDCCH in blank OFDM symbols in the subframe n+a.

When the blank symbols are three OFDM symbols, the base station repeatedly transmits, in first three OFDM symbols in the subframe n+a, the NB-PDCCH transmitted in first three OFDM symbols in the subframe n. When the blank symbols are five OFDM symbols, the base station repeatedly transmits, in first five OFDM symbols in the subframe n+a, the NB-PDCCH transmitted in first five OFDM symbols in the subframe n.

Specifically, if the subframe n+a is a first subframe that may transmit the NB-PDCCH, the NB-PDCCH transmitted in first three OFDM symbols or first five OFDM symbols in a first subframe for transmitting the NB-PDCCH after the subframe n+a, is transmitted in the blank OFDM symbols in the subframe n+a.

Likewise, as shown in FIG. 18, if the subframe n is a first subframe for transmitting the NB-PDCCH, and the NB-PDCCH should be transmitted in one subframe, but if the first downlink subframe n+a after the subframe n is a subframe for transmitting the NB-PBCH, the NB-PSS, or the NB-SSS, the NB-PDCCH is transmitted in the blank OFDM symbols in the subframe n+a.

The NB-PDCCH is mapped to available REs in the subframe n and the subframe n+a, and the available REs include REs not transmitting any reference signal in the subframe n and REs not transmitting any reference signal in the blank OFDM symbols in the subframe n+a; or the NB-PDCCH is mapped to available REs in the subframe n, and after the mapping, the NB-PDCCH transmitted in the first three or five OFDM symbols in the subframe n is repeatedly mapped to REs not transmitting any reference signal in the first three or five OFDM symbols in the subframe n+a.

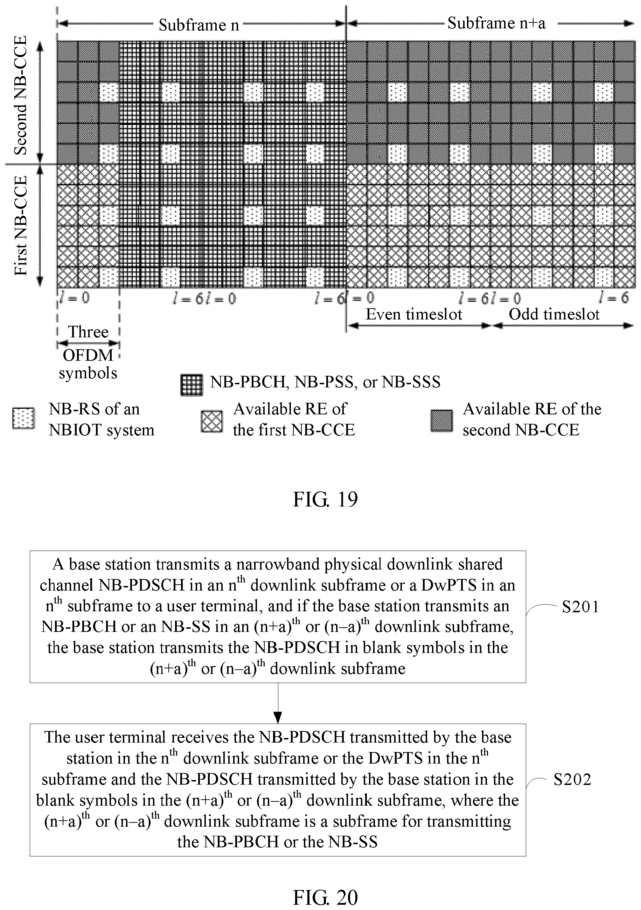

For example, as shown in FIG. 19, if the subframe n is a subframe for transmitting the NB-PBCH, the NB-PSS, or the NB-SSS, and if the first downlink subframe n+a after the subframe n is a first subframe that may transmit the NB-PDCCH and the NB-PDCCH should be transmitted in one subframe, the NB-PDCCH is transmitted in blank OFDM symbols in the subframe for transmitting the NB-PBCH, the NB-PSS, or the NB-SSS.

The NB-PDCCH is mapped to the available REs in the subframe n and the subframe n+a, and the available resources include REs not transmitting any reference signal in the blank OFDM symbols in the subframe n and REs not transmitting any reference signal in the subframe n+a; or the NB-PDCCH is mapped to the available REs in the subframe n+a, and after the mapping, the NB-PDCCH transmitted in the first three or five OFDM symbols in the subframe n+a is repeatedly mapped to REs not transmitting any reference signal in the first three or five OFDM symbols in the subframe n.

Further, if the $n^{th}$ downlink subframe is a subframe for transmitting a narrowband physical broadcast channel NB-PBCH, a narrowband primary synchronization signal NB-PSS, or a narrowband secondary synchronization signal NB-SSS, the base station transmits the NB-PDCCH in the first three or five consecutive OFDM symbols in the $n^{th}$ downlink subframe. Herein the method for transmitting the NB-PDCCH in the first three or five consecutive OFDM symbols is the same as the foregoing method for transmitting the NB-PDCCH in the blank symbols, and is not further described herein.

It should be noted that, the NB-PDCCH transmitted by using the first three or five consecutive OFDM symbols may be applicable only to a cell center or a user terminal with a good coverage condition in a cell. Therefore, the base station may transmit configuration information to the user terminal, where the configuration information includes instruction information used to instruct the user terminal to monitor the NB-PDCCH transmitted in the blank symbols. A channel or signaling carrying the configuration information includes at least one of an NB-PBCH, SI (System Information, system information), RRC (Radio Resource Control, radio resource control) signaling, or MAC (Media Access Control, Media Access Control) signaling.

Correspondingly, if the user terminal receives the narrowband physical broadcast channel NB-PBCH or the narrowband synchronization signal NB-SS transmitted by the base station in the $(n+a)^{th}$ or $(n-a)^{th}$ downlink subframe, the user terminal receives the NB-PDCCH transmitted by the base station in the blank symbols in the $(n+a)^{th}$ or $(n-a)^{th}$ downlink subframe.

The $(n+a)^{th}$ downlink subframe is a first downlink subframe or a first subframe including a DwPTS after the $n^{th}$ downlink subframe or the $n^{th}$ subframe including the DwPTS, the $(n-a)^{th}$ downlink subframe is a first downlink subframe or a first subframe including a DwPTS before the $n^{th}$ downlink subframe or the $n^{th}$ subframe including the DwPTS, the blank symbols are first b consecutive OFDM symbols after all OFDM symbols in the downlink subframe for transmitting the NB-PBCH or the NB-SS are arranged in ascending time order, $a>0$, b is equal to 3 or 5, and the NB-SS includes a narrowband primary synchronization signal NB-PSS or a narrowband secondary synchronization signal NB-SSS.

Specifically, with respect to an $i^{th}$ OFDM symbol in the blank symbols, the NB-PDCCH mapped to an $i^{th}$ OFDM symbol after all OFDM symbols in the $n^{th}$ subframe are arranged in ascending time order is repeatedly transmitted in the $i^{th}$ OFDM symbol, and $i \leq 5$.

Therefore, the user terminal can perform joint detection on the NB-PDSCH received in the $i^{th}$ OFDM symbol and the NB-PDSCH received in the $i^{th}$ OFDM symbol after all OFDM symbols in the $n^{th}$ subframe are arranged in ascending time order, thereby improving NB-PDSCH detection performance. For example, the joint detection may include corresponding symbol level combination or bit level combination.

It can be learned that, in the physical downlink channel transmission method provided by this embodiment of the present invention, the blank symbols are fully used, and resource utilization can be improved.

Further, the physical downlink channel transmission method provided by this embodiment of the present invention further includes: the base station transmits the NB-PDCCH in a preset aggregation window.

The preset aggregation window includes c*y REs, c=b*z, c represents a quantity of consecutive OFDM symbols included in the preset aggregation window in the time domain, z is a quantity of common downlink subframes included in the preset aggregation window, y represents a quantity of subcarriers in the frequency domain and corresponding to each OFDM symbol in the preset aggregation window, b represents a quantity of consecutive OFDM symbols in each of the z common downlink subframes in the time domain, the b OFDM symbols are first b consecutive OFDM symbols after all OFDM symbols in the common downlink subframe are arranged in ascending time order, the base station transmits a narrowband physical broadcast channel NB-PBCH or a narrowband synchronization signal NB-SS in the common downlink subframe, $c \geq 3$, $z \geq 1$, $12 \geq y \geq 1$, and b is equal to 3 or 5.

It may be understood that, the preset aggregation window is formed by aggregation of blank symbols in the z common downlink subframes, and the mapping of blank symbols that belong to a same subframe in the preset aggregation window is the same as the mapping of the blank symbols described above.

Further, the aggregation window may also include the $n^{th}$ downlink subframe or the $n^{th}$ subframe including the DwPTS.

Further, before the base station transmits the NB-PDCCH in the preset aggregation window, the base station transmits first configuration information to the user terminal, where the first configuration information includes position information of the aggregation window, and the position information of the aggregation window includes at least a start time position of the preset aggregation window and a length of the preset aggregation window, or a period and a time offset of the preset aggregation window.

Specifically, a channel or signaling carrying the first configuration information includes at least one of an NB-PBCH, SI (System Information, system information), RRC (Radio Resource Control, radio resource control) signaling, or MAC (Media Access Control, Media Access Control) signaling.

Further, before the base station transmits the NB-PDCCH in the preset aggregation window, the base station further transmits second configuration information to the user terminal, where the second configuration information instructs the user terminal to receive or monitor the NB-PDCCH in the preset aggregation window.

Specifically, a channel or signaling carrying the second configuration information includes at least one of an NB-PBCH, SI (System Information, system information), RRC (Radio Resource Control, radio resource control) signaling, or MAC (Media Access Control, Media Access Control) signaling.

Correspondingly, the user terminal further receives or monitors the NB-PDCCH in the preset aggregation window.

The preset aggregation window includes $c*y$ REs, $c=b*z$, c represents a quantity of consecutive OFDM symbols included in the preset aggregation window in the time domain, z is a quantity of common downlink subframes included in the preset aggregation window, y represents a quantity of subcarriers in the frequency domain and corresponding to each OFDM symbol in the preset aggregation window, b represents a quantity of consecutive OFDM symbols in each of the z common downlink subframes in the time domain, the b OFDM symbols are first b consecutive OFDM symbols after all OFDM symbols in the common downlink subframe are arranged in ascending time order, the user terminal receives a narrowband physical broadcast channel NB-PBCH or a narrowband synchronization signal NB-SS in the common downlink subframe, $c \geq 3$, $z \geq 1$, $12 \geq y \geq 1$, and b is equal to 3 or 5.

Further, before the user terminal receives or monitors the NB-PDCCH in the preset aggregation window, the user terminal further receives the first configuration information transmitted by the base station.

The first configuration information includes position information of the aggregation window, and the position information of the aggregation window includes at least a start time position of the preset aggregation window and a length of the preset aggregation window, or a period and a time offset of the preset aggregation window.

Further, before the user terminal receives or monitors the NB-PDCCH in the preset aggregation window, the user terminal further receives the second configuration information transmitted by the base station.

The second configuration information instructs the user terminal to receive or monitor the NB-PDCCH in the preset aggregation window.

This embodiment of the present invention provides a physical downlink channel transmission method. The base station transmits the NB-PDCCH in the $n^{th}$ downlink subframe or the DwPTS in the $n^{th}$ subframe to the terminal, where the NB-PDCCH is mapped to the NB-PDCCH mapped basic element whose frequency resource bandwidth is less than or equal to 180 kHz, thereby implementing PDCCH transmission in the NBIOT system.

**Embodiment 2**

FIG. 20 is a schematic flowchart of a physical downlink channel transmission method not covered by the present invention. The transmission method includes a transmitting method and a receiving method, and the transmission method is applied to a communications system as shown in FIG. 4.

S201. A base station transmits a narrowband physical downlink shared channel NB-PDSCH in an $n^{th}$ downlink subframe or a DwPTS in an $n^{th}$ subframe to a user terminal, and if the base station transmits an NB-PBCH or an NB-SS in an $(n+a)^{th}$ or $(n-a)^{th}$ downlink subframe, the base station transmits the NB-PDSCH in blank symbols in the $(n+a)^{th}$ or $(n-a)^{th}$ downlink subframe.

S202. The user terminal receives the NB-PDSCH transmitted by the base station in the $n^{th}$ downlink subframe or the DwPTS in the $n^{th}$ subframe and the NB-PDSCH transmitted by the base station in the blank symbols in the $(n+a)^{th}$ or $(n-a)^{th}$ downlink subframe, where the $(n+a)^{th}$ or $(n-a)^{th}$ downlink subframe is a subframe for transmitting the NB-PBCH or the NB-SS.

In this method not covered by the present invention, the $(n+a)^{th}$ downlink subframe is a first downlink subframe or a first subframe including a DwPTS after the $n^{th}$ downlink subframe or the $n^{th}$ subframe including the DwPTS, the $(n-a)^{th}$ downlink subframe is a first downlink subframe or a first subframe including a DwPTS before the $n^{th}$ downlink subframe or the $n^{th}$ subframe including the DwPTS, the blank symbols are first b consecutive OFDM symbols after all OFDM symbols in the downlink subframe for transmitting the NB-PBCH or the NB-SS are arranged in ascending time order, $a>0$, b is equal to 3 or 5, and the NB-SS includes a narrowband primary synchronization signal NB-PSS or a narrowband secondary synchronization signal NB-SSS.

Specifically, with respect to an $i^{th}$ OFDM symbol in the blank symbols, the NB-PDSCH mapped to an $i^{th}$ OFDM symbol after all OFDM symbols in the $n^{th}$ downlink subframe or the $n^{th}$ subframe including the DwPTS are arranged in ascending time order is repeatedly transmitted in the $i^{th}$ OFDM symbol, and $i \leq 5$.

Therefore, the user terminal can perform joint detection on the NB-PDSCH received in the $i^{th}$ OFDM symbol and the NB-PDSCH received in the $i^{th}$ OFDM symbol after all OFDM symbols in the $n^{th}$ subframe are arranged in ascending time order, thereby improving NB-PDSCH detection performance. For example, the joint detection may include corresponding symbol level combination or bit level combination.

It may be understood that, because a type-2 frame structure includes a downlink subframe, a special subframe, and an uplink subframe, there is a scenario in which a downlink subframe and an uplink subframe are adjacent in the type-2 frame structure. The method provided is intended for the downlink subframe. Therefore, in the type-2 frame structure, the $(n+a)^{th}$ downlink subframe or the $(n-a)^{th}$ downlink subframe may be a subframe that is not adjacent to the $n^{th}$ downlink subframe.

In other words, consecutive subframes are any two adjacent downlink subframes.

In an independent deployment scenario or a guard band deployment scenario, a reference signal in each subframe is only an NB-RS. In the subframe for transmitting the NB-PBCH, the NB-PBCH is not transmitted in first three OFDM symbols. In the subframe for transmitting the NB-PSS, when a system configuration is a normal CP, last 11 OFDM symbols in the subframe are used for transmitting the NB-PSS, that is, the NB-PSS is not transmitted in first three OFDM symbols. In the subframe for transmitting the NB-SSS, when the system configuration is a normal CP, last 11 or 9 OFDM symbols in the subframe are used for transmitting the NB-SSS, that is, the NB-SSS is not transmitted in first three or five OFDM symbols.

For example, as shown in FIG. 18, if a downlink subframe n is a subframe for transmitting an NB-PDSCH and the NB-PDSCH is transmitted in two or more subframes, and if a next downlink subframe n+a is a subframe for transmitting an NB-PBCH, an NB-PSS, or an NB-SSS, the base station transmits the NB-PDSCH in blank OFDM symbols in the subframe n+a.

When the blank symbols are three OFDM symbols, the base station repeatedly transmits, in first three OFDM symbols in the subframe n+a, the NB-PDSCH transmitted in first three OFDM symbols in the subframe n. When the blank symbols are five OFDM symbols, the base station repeatedly transmits, in first five OFDM symbols in the subframe n+a, the NB-PDSCH transmitted in first five OFDM symbols in the subframe n.

Specifically, if the subframe n is a subframe for transmitting the NB-PDSCH and the NB-PDSCH is transmitted in two or more subframes, and if the next downlink subframe n+a is a subframe for transmitting the NB-PBCH, the NB-PSS, or the NB-SSS, the base station transmits the NB-PDSCH in blank OFDM symbols in the subframe n+a.

Specifically, if the subframe n+a is a first subframe that may transmit the NB-PDSCH, the NB-PDSCH transmitted in first three OFDM symbols or first five OFDM symbols in a first subframe for transmitting the NB-PDSCH after the subframe n+a, is transmitted in the blank OFDM symbols in the subframe n+a.

Likewise, as shown in FIG. 18, if the subframe n is a first subframe for transmitting the NB-PDSCH, and the NB-PDSCH should be transmitted in one subframe, but if the first downlink subframe n+a after the subframe n is a subframe for transmitting the NB-PBCH, the NB-PSS, or the NB-SSS, the NB-PDSCCH is transmitted in the blank OFDM symbols in the subframe n+a.

The NB-PDSCH is mapped to available REs in the subframe n and the subframe n+a, and the available REs include REs not transmitting any reference signal in the subframe n and REs not transmitting any reference signal in the blank OFDM symbols in the subframe n+a; or the NB-PDSCH is mapped to available REs in the subframe n, and after the mapping, the NB-PDSCH transmitted in the first three or five OFDM symbols in the subframe n is repeatedly mapped to REs not transmitting any reference signal in the first three or five OFDM symbols in the subframe n+a.

For example, as shown in FIG. 19, if the subframe n is a subframe for transmitting the NB-PBCH, the NB-PSS, or the NB-SSS, and if the first downlink subframe n+a after the subframe n is a first subframe that may transmit the NB-PDSCH and the NB-PDSCH should be transmitted in one subframe, the NB-PDSCH is transmitted in blank OFDM symbols in the subframe for transmitting the NB-PBCH, the NB-PSS, or the NB-SSS.

The NB-PDSCH is mapped to the available REs in the subframe n and the subframe n+a, and the available resources include REs not transmitting any reference signal in the blank OFDM symbols in the subframe n and REs not transmitting any reference signal in the subframe n+a; or the NB-PDSCH is mapped to the available REs in the subframe n+a, and after the mapping, the NB-PDSCH transmitted in the first three or five OFDM symbols in the subframe n+a is repeatedly mapped to REs not transmitting any reference signal in the first three or five OFDM symbols in the subframe n.

Further, the physical downlink channel transmission method provided further includes: the base station transmits the NB-PDSCH in a preset aggregation window.

The preset aggregation window includes $c*y$ resource elements REs, $c=b*z$, c represents a quantity of consecutive orthogonal frequency division multiplexing OFDM symbols included in the preset aggregation window in a time domain, z is a quantity of common downlink subframes included in the preset aggregation window, y represents a quantity of subcarriers in a frequency domain and corresponding to each OFDM symbol in the preset aggregation window, b represents a quantity of consecutive OFDM symbols in each of the z common downlink subframes in the time domain, the b OFDM symbols are first b consecutive OFDM symbols after all OFDM symbols in the common downlink subframe are arranged in ascending time order, the base station transmits a narrowband physical broadcast channel NB-PBCH or a narrowband synchronization signal NB-SS in the common downlink subframe, $c \geq 3$, $z \geq 1$, $12 \geq y \geq 1$, and b is equal to 3 or 5.

Optionally, the aggregation window not only includes common downlink subframes, but also may further include the $n^{th}$ downlink subframe or the $n^{th}$ subframe including the DwPTS.

Further, before the base station transmits the NB-PDSCH in the preset aggregation window, the base station transmits first configuration information to the user terminal, where the first configuration information includes time position information of the aggregation window, and the time position information of the aggregation window includes at least a start time position of the preset aggregation window and a length of the preset aggregation window, or a period and a time offset of the preset aggregation window.

A channel or signaling carrying the first configuration information includes at least one of an NB-PBCH, SI (System Information, system information), RRC (Radio Resource Control, radio resource control) signaling, or MAC (Media Access Control, Media Access Control) signaling.

Further, before the base station transmits the NB-PDSCH in the preset aggregation window, the base station transmits second configuration information to the user terminal, where the second configuration information instructs the user terminal to receive or monitor the NB-PDSCH in the preset aggregation window.

Specifically, a channel or signaling carrying the second configuration information includes at least one of an NB-PBCH, SI (System Information, system information), RRC (Radio Resource Control, radio resource control) signaling, or MAC (Media Access Control, Media Access Control) signaling.

In the physical downlink channel transmission method provided, the blank symbols can be fully used, and resource utilization can be improved.

**Embodiment 3**

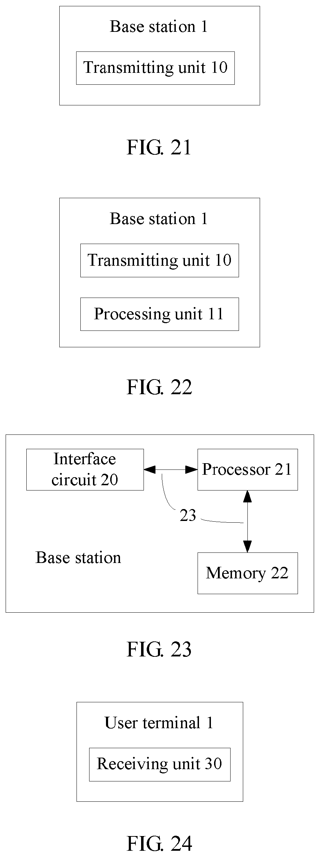

This embodiment of the present invention provides a base station 1. The base station 1 is configured to perform the steps performed by the base station in the foregoing method. The base station 1 may include modules corresponding to the corresponding steps. As shown in FIG. 21, the base station 1 includes:

a transmitting unit 10, configured to transmit a narrowband physical downlink control channel NB-PDCCH in an $n^{th}$ downlink subframe or a downlink pilot timeslot DwPTS in an $n^{th}$ subframe to a user terminal.

The NB-PDCCH is mapped to an NB-PDCCH mapped basic element, the NB-PDCCH mapped basic element includes a first frequency resource or a second frequency resource in a frequency domain and includes at least one orthogonal frequency division multiplexing OFDM symbol included in the $n^{th}$ downlink subframe or the downlink pilot timeslot DwPTS in the $n^{th}$ subframe in a time domain, a bandwidth of the first frequency resource is less than or equal to 180 kHz, the second frequency resource is a frequency resource included in a resource block RB, and $n \geq 1$.

Specifically, the NB-PDCCH mapped basic element includes a first narrowband control channel element NB-CCE and/or a second NB-CCE, the first NB-CCE or the second NB-CCE includes m resource elements REs, and $m > 1$.

Specifically, the NB-PDCCH is an NB-PDCCH in a first format, and the NB-PDCCH in the first format is transmitted in m REs; or

the NB-PDCCH is an NB-PDCCH in a second format, and the NB-PDCCH in the second format is transmitted in 2*m REs.

Specifically, the m REs include x*y REs, x represents a quantity of consecutive orthogonal frequency division multiplexing OFDM symbols in the $n^{th}$ downlink subframe or the DwPTS in the $n^{th}$ subframe in the time domain, y represents a quantity of subcarriers in the frequency domain and corresponding to each OFDM symbol in the $n^{th}$ downlink subframe or the DwPTS in the $n^{th}$ subframe, $x > 1$, and $12 \geq y \geq 1$.

Specifically, if the $n^{th}$ downlink subframe or the $n^{th}$ subframe including the DwPTS is a subframe for transmitting a narrowband physical broadcast channel NB-PBCH, a narrowband primary synchronization signal NB-PSS, or a narrowband secondary synchronization signal NB-SSS, the x OFDM symbols are first three or five consecutive OFDM symbols after all OFDM symbols in the $n^{th}$ downlink subframe or the DwPTS in the $n^{th}$ subframe in the time domain are arranged in ascending time order; or

x represents a quantity of consecutive OFDM symbols from a first OFDM symbol to a last OFDM symbol after all OFDM symbols in the $n^{th}$ downlink subframe or the DwPTS in the $n^{th}$ subframe in the time domain are arranged in ascending time order; or
x represents a quantity of consecutive OFDM symbols from a $(p+1)^{th}$ OFDM symbol to a last OFDM symbol after all OFDM symbols in the $n^{th}$ downlink subframe or the DwPTS in the $n^{th}$ subframe in the time domain are arranged in ascending time order, where p is a preset value, or p is a value carried in the NB-PBCH or system information by the base station, and $4 \geq p \geq 0$.

Specifically, each OFDM symbol in the m REs of the first NB-CCE or the second NB-CCE includes six consecutive subcarriers, and indexes of the six subcarriers included in each OFDM symbol of the first NB-CCE or the second NB-CCE are the same or change according to a first preset rule.

Specifically, if the NB-PDCCH is the NB-PDCCH in the first format, one or two NB-PDCCH candidates exist in the $n^{th}$ downlink subframe or the DwPTS in the $n^{th}$ subframe in a communications system to which the base station belongs.

Specifically, if the NB-PDCCH is the NB-PDCCH in the second format, one NB-PDCCH candidate exists in the $n^{th}$ downlink subframe or the DwPTS in the $n^{th}$ subframe in the communications system to which the base station belongs.

Further, as shown in FIG. 22, the base station 1 further includes a processing unit 11.

The processing unit 11 is configured to map the NB-PDCCH in the first format to available REs in a first resource element group or available REs in a second resource element group if the NB-PDCCH is the NB-PDCCH in the first format, where the available REs are REs that do not include any reference signal.

The first resource element group includes all REs of the first NB-CCE, and the second resource element group includes all REs of the second NB-CCE; or

the first resource element group includes all REs of the first NB-CCE and all REs of the second NB-CCE in a first timeslot in the $n^{th}$ downlink subframe, and the second resource element group includes all REs of the first NB-CCE and all REs of the second NB-CCE in a second timeslot in the $n^{th}$ downlink subframe.

Further, before mapping the NB-PDCCH in the first format to the available REs in the first resource element group or the available REs in the second resource element group, the processing unit 11 is further configured to: perform scrambling, modulation, layer mapping, and precoding processing on a first to-be-transmitted bit block to generate a first vector block, where the first to-be-transmitted bit block is a to-be-transmitted bit block in the NB-PDCCH in the first format; and perform a permutation on the first vector block to generate a first to-be-transmitted symbol sequence.

Further, the processing unit 11 is specifically configured to map the first to-be-transmitted symbol sequence to the available REs in the first resource element group or the available REs in the second resource element group.

Further, the processing unit 11 is configured to map the NB-PDCCH in the second format to available REs in a first resource element group and available REs in a second resource element group if the NB-PDCCH is the NB-PDCCH in the second format, where the available REs are REs that do not include any reference signal.

Further, the processing unit 11 is specifically configured to map the NB-PDCCH in the second format to available REs of the first NB-CCE and available REs of the second NB-CCE sequentially; or map the NB-PDCCH in the second format to available REs of each symbol in the $n^{th}$ downlink subframe or the DwPTS in the $n^{th}$ subframe sequentially.

Further, before mapping the NB-PDCCH in the second format to the available REs in the first resource element group and the available REs in the second resource element group, the processing unit 11 is further configured to perform scrambling, modulation, layer mapping, and precoding processing on a second to-be-transmitted bit block to generate a second vector block, where the second to-be-transmitted bit block is a to-be-transmitted bit block in the NB-PDCCH in the second format; and configured to perform a permutation on the second vector block to generate a second to-be-transmitted symbol sequence.

Further, the processing unit 11 is specifically configured to map the second to-be-transmitted symbol sequence to the available REs in the first resource element group and the available REs in the second resource element group.

Further, the transmitting unit 10 is further configured to transmit the NB-PDCCH in blank symbols in an $(n+a)^{th}$ or $(n-a)^{th}$ downlink sub frame if the transmitting unit transmits a narrowband physical broadcast channel NB-PBCH or a narrowband synchronization signal NB-SS in the $(n+a)^{th}$ or $(n-a)^{th}$ downlink subframe.

The $(n+a)^{th}$ downlink subframe is a first downlink subframe or a first subframe including a DwPTS after the $n^{th}$ downlink subframe or the $n^{th}$ subframe including the DwPTS, the $(n-a)^{th}$ downlink subframe is a first downlink subframe or a first subframe including a DwPTS before the $n^{th}$ downlink subframe or the $n^{th}$ subframe including the DwPTS, the blank symbols are first b consecutive OFDM symbols after all OFDM symbols in the downlink subframe for transmitting the NB-PBCH or the NB-SS are arranged in ascending time order, $a>0$, b is equal to 3 or 5, and the NB-SS includes a narrowband primary synchronization signal NB-PSS or a narrowband secondary synchronization signal NB-SSS.

Specifically, with respect to an $i^{th}$ OFDM symbol in the blank symbols, the NB-PDCCH mapped to an $i^{th}$ OFDM symbol after all OFDM symbols in the $n^{th}$ downlink subframe or the $n^{th}$ subframe including the DwPTS are arranged in ascending time order is repeatedly transmitted in the $i^{th}$ OFDM symbol, and $i \leq 5$.

Further, the transmitting unit 10 is further configured to transmit the NB-PDCCH in a preset aggregation window.

The preset aggregation window includes $c*y$ REs, $c=b*z$, c represents a quantity of OFDM symbols included in the preset aggregation window in the time domain, z is a quantity of common downlink subframes included in the preset aggregation window, y represents a quantity of subcarriers in the frequency domain and corresponding to each OFDM symbol in the preset aggregation window, b represents a quantity of consecutive OFDM symbols in each of the z common downlink subframes in the time domain, the b OFDM symbols are first b consecutive OFDM symbols after all OFDM symbols in the common downlink subframe are arranged in ascending time order, the base station transmits a narrowband physical broadcast channel NB-PBCH or a narrowband synchronization signal NB-SS in the common downlink subframe, $c \geq 3$, $z \geq 1$, $12 \geq y \geq 1$, and b is equal to 3 or 5.

Further, the transmitting unit 10 is further configured to transmit first configuration information to the user terminal before transmitting the NB-PDCCH in the preset aggregation window.

The first configuration information includes position information of the aggregation window, and the position information of the aggregation window includes at least a start time position of the preset aggregation window and a length of the preset aggregation window, or a period and a time offset of the preset aggregation window.

Further, the transmitting unit 10 is further configured to transmit second configuration information to the user terminal before transmitting the NB-PDCCH in the preset aggregation window, where the second configuration information instructs the user terminal to receive or monitor the NB-PDCCH in the preset aggregation window.

Further, the transmitting unit 10 is configured to transmit a narrowband physical downlink shared channel NB-PDSCH in an $n^{th}$ downlink subframe or a downlink pilot timeslot DwPTS in an $n^{th}$ subframe to a user terminal; and configured to transmit the NB-PDSCH in blank symbols in an $(n+a)^{th}$ or $(n-a)^{th}$ downlink subframe if the transmitting unit 10 transmits a narrowband physical broadcast channel NB-PBCH or a narrowband synchronization signal NB-SS in the $(n+a)^{th}$ or $(n-a)^{th}$ downlink subframe.

The $(n+a)^{th}$ downlink subframe is a first downlink subframe or a first subframe including a DwPTS after the $n^{th}$ downlink subframe or the $n^{th}$ subframe including the DwPTS, the $(n-a)^{th}$ downlink subframe is a first downlink subframe or a first subframe including a DwPTS before the $n^{th}$ downlink subframe or the $n^{th}$ subframe including the DwPTS, the blank symbols are first b consecutive OFDM symbols after all OFDM symbols in the downlink subframe for transmitting the NB-PBCH or the NB-SS are arranged in ascending time order, a>0, b is equal to 3 or 5, and the NB-SS includes a narrowband primary synchronization signal NB-PSS or a narrowband secondary synchronization signal NB-SSS.

Specifically, with respect to an $i^{th}$ OFDM symbol in the blank symbols, the NB-PDSCH mapped to an $i^{th}$ OFDM symbol after all OFDM symbols in the $n^{th}$ downlink subframe or the $n^{th}$ subframe including the DwPTS are arranged in ascending time order is repeatedly transmitted in the $i^{th}$ OFDM symbol, and $i \leq 5$.

Further, the transmitting unit 10 is further configured to transmit the NB-PDSCH in a preset aggregation window.

The preset aggregation window includes c*y resource elements REs, c=b*z, c represents a quantity of orthogonal frequency division multiplexing OFDM symbols included in the preset aggregation window in a time domain, z is a quantity of common downlink subframes included in the preset aggregation window, y represents a quantity of subcarriers in a frequency domain and corresponding to each OFDM symbol in the preset aggregation window, b represents a quantity of consecutive OFDM symbols in each of the z common downlink subframes in the time domain, the b OFDM symbols are first b consecutive OFDM symbols after all OFDM symbols in the common downlink subframe are arranged in ascending time order, the base station transmits a narrowband physical broadcast channel NB-PBCH or a narrowband synchronization signal NB-SS in the common downlink subframe, $c \geq 3$, $z \geq 1$, $12 \geq y \geq 1$, and b is equal to 3 or 5.

Further, the transmitting unit 10 is further configured to transmit first configuration information to the user terminal before transmitting the NB-PDSCH in the preset aggregation window, where the first configuration information includes position information of the aggregation window, and the position information of the aggregation window includes at least a start time position of the preset aggregation window and a length of the preset aggregation window, or a period and a time offset of the preset aggregation window.

Further, the transmitting unit 10 is further configured to transmit second configuration information to the user terminal before transmitting the NB-PDSCH in the preset aggregation window.

The second configuration information instructs the user terminal to receive or monitor the NB-PDSCH in the preset aggregation window.

It may be understood that, in this embodiment, the base station 1 is logically divided merely according to functions implemented by the base station 1. In an actual application, the foregoing units may be superposed or split. In addition, the functions implemented by the base station 1 provided by this embodiment correspond to the physical downlink channel transmission method provided by the foregoing Embodiment 1 and the physical downlink channel transmission method provided by the foregoing Embodiment 2. A more detailed processing procedure implemented by the base station 1 is already described in detail in the foregoing method Embodiment 1 and Embodiment 2, and is not further described in detail herein.

Another embodiment of the present invention provides a base station. As shown in FIG. 23, the base station includes an interface circuit 20, a processor 21, a memory 22, and a system bus 23.

The interface circuit 20, the processor 21, and the memory 22 are connected to the system bus 23, and communicate with each other.

It may be understood by a person skilled in the art that, a structure of the base station shown in FIG. 23 does not constitute a limitation on the base station. The base station may include more or fewer components than that shown in the figure, or some components are combined, or component arrangements are different.

Specifically, when the base station runs, the base station performs the physical downlink channel transmission method described in Embodiment 1 or Embodiment 2. For the specific physical downlink channel transmission method, refer to the descriptions about the embodiment shown in FIG. 5 or FIG. 20. Details are not further described herein.

Specifically, the interface circuit 20 is configured to implement a communication connection between the base station and a user terminal.

Specifically, the memory 22 may be configured to store a software program and an application module. The processor 21 executes various function applications and data processing of the base station by running the software program and application module stored in the memory 22. The memory 22 may mainly include a program storage area and a data storage area. The program storage area may store an operating system, an application program required by at least one function (for example, transmitting a subframe), and the like.

The memory 22 may include a volatile memory, for example, a high-speed random access memory (RAM, Random Access Memory). The memory 22 may also include a nonvolatile memory, for example, at least one magnetic disk storage, a flash memory, or another volatile solid-state storage.

Specifically, the processor 21 is a control center of the base station. The processor 21 uses various interfaces and lines to connect all parts of the entire base station, and executes various functions and data processing of the base station by running or executing the software program and/or application module stored in the memory 22 and invoking data stored in the memory 22, thereby performing overall monitoring on the base station.

The processor 21 may be a central processing unit (CPU, Central Processing Unit). The processor 21 may also be another general purpose processor, a digital signal processor (DSP, Digital Signal Processor), another programmable logic device or transistor logic device, a discrete hardware component, or the like. The general purpose processor may be a microprocessor, or the processor may be any conventional processor or the like.

The system bus 23 may include a data bus, a power bus, a control bus, a signal status bus, and the like. In this embodiment, for clear description, various buses in FIG. 23 are all marked as the system bus 23.

This embodiment of the present invention provides a base station. The base station transmits the NB-PDCCH in the $n^{th}$ downlink subframe or the DwPTS in the $n^{th}$ subframe to the terminal, where the NB-PDCCH is mapped to the NB-PDCCH mapped basic element whose frequency resource bandwidth is less than or equal to 180 kHz, thereby implementing PDCCH transmission in an NBIOT system.

**Embodiment 4**

This embodiment of the present invention provides a user terminal 1. The user terminal 1 is configured to perform the steps performed by the user terminal in the foregoing method. The user terminal 1 may include modules corresponding to the corresponding steps. As shown in FIG. 24, the user terminal 1 includes:

a receiving unit 30, configured to receive a narrowband physical downlink control channel NB-PDCCH transmitted by a base station in an $n^{th}$ downlink subframe or a downlink pilot timeslot DwPTS in an $n^{th}$ subframe.

The NB-PDCCH is mapped to an NB-PDCCH mapped basic element, the NB-PDCCH mapped basic element includes a first frequency resource or a second frequency resource in a frequency domain and includes at least one orthogonal frequency division multiplexing OFDM symbol included in the $n^{th}$ downlink subframe or the downlink pilot timeslot DwPTS in the $n^{th}$ subframe in a time domain, a bandwidth of the first frequency resource is less than or equal to 180 kHz, the second frequency resource is a frequency resource included in a resource block RB, and $n \geq 1$.

Specifically, the NB-PDCCH mapped basic element includes a first narrowband control channel element NB-CCE and/or a second NB-CCE, the first NB-CCE or the second NB-CCE includes m resource elements REs, and $m > 1$.

Specifically, the NB-PDCCH is an NB-PDCCH in a first format, and the NB-PDCCH in the first format is received in m REs; or

the NB-PDCCH is an NB-PDCCH in a second format, and the NB-PDCCH in the second format is received in 2*m REs.

Specifically, the m REs include x*y REs, x represents a quantity of consecutive orthogonal frequency division multiplexing OFDM symbols in the $n^{th}$ downlink subframe or the DwPTS in the $n^{th}$ subframe in the time domain, y represents a quantity of subcarriers in the frequency domain and corresponding to each OFDM symbol in the $n^{th}$ downlink subframe or the DwPTS in the $n^{th}$ sub frame, $x > 1$, and $12 \geq y \geq 1$.

Specifically, if the $n^{th}$ downlink subframe or the $n^{th}$ subframe including the DwPTS is a subframe for transmitting a narrowband physical broadcast channel NB-PBCH, a narrowband primary synchronization signal NB-PSS, or a narrowband secondary synchronization signal NB-SSS, the x OFDM symbols are first three or five consecutive OFDM symbols after all OFDM symbols in the $n^{th}$ downlink subframe or the DwPTS in the $n^{th}$ subframe in the time domain are arranged in ascending time order; or

x represents a quantity of consecutive OFDM symbols from a first OFDM symbol to a last OFDM symbol after all OFDM symbols in the $n^{th}$ downlink subframe or the DwPTS in the $n^{th}$ subframe in the time domain are arranged in ascending time order; or

x represents a quantity of consecutive OFDM symbols from a $(p+1)^{th}$ OFDM symbol to a last OFDM symbol after all OFDM symbols in the $n^{th}$ downlink subframe or the DwPTS in the $n^{th}$ subframe in the time domain are arranged in ascending time order, where p is a preset value, or p is a value carried in the NB-PBCH or system information by the base station, and $4 \geq p \geq 0$.

Specifically, each OFDM symbol in the m REs of the first NB-CCE or the second NB-CCE includes six consecutive subcarriers, and indexes of the six subcarriers included in each OFDM symbol of the first NB-CCE or the second NB-CCE are the same or change according to a first preset rule.

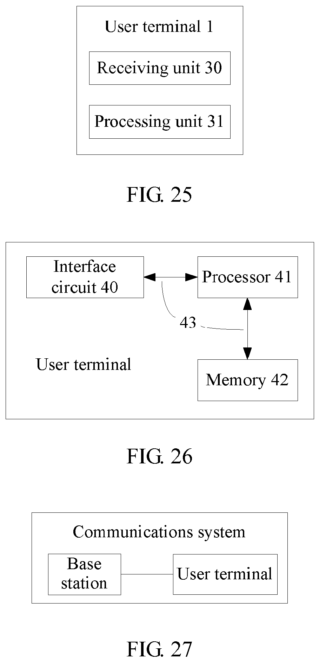

Further, as shown in FIG. 25, the user terminal 1 further includes a processing unit 31.

If the NB-PDCCH is the NB-PDCCH in the first format, the processing unit 31 is configured to monitor a first NB-PDCCH candidate and/or a second NB-PDCCH candidate in the $n^{th}$ downlink subframe or the DwPTS in the $n^{th}$ subframe, and the first NB-PDCCH candidate or the second NB-PDCCH candidate includes m REs.

Specifically, the NB-PDCCH in the first format is mapped to available REs of the first NB-PDCCH candidate or available REs of the second NB-PDCCH candidate, and the available REs are REs that do not include any reference signal.

The first NB-PDCCH candidate includes all REs of the first NB-CCE, and the second NB-PDCCH candidate includes all REs of the second NB-CCE; or

the first NB-PDCCH candidate includes all REs of the first NB-CCE and all REs of the second NB-CCE in a first timeslot in the $n^{th}$ downlink subframe, and the second NB-PDCCH candidate includes all REs of the first NB-CCE and all REs of the second NB-CCE in a second timeslot in the $n^{th}$ downlink subframe.

If the NB-PDCCH is the NB-PDCCH in the second format, the processing unit 31 is configured to map the NB-PDCCH in the second format to available REs of the first NB-CCE and available REs of the second NB-CCE, and the available REs are REs that do not include any reference signal.

Further, the receiving unit 30 is further configured to receive the NB-PDCCH transmitted by the base station in blank symbols in an $(n+a)^{th}$ or $(n-a)^{th}$ downlink subframe, where the $(n+a)^{th}$ or $(n-a)^{th}$ downlink subframe is a subframe for transmitting a narrowband physical broadcast channel NB-PBCH or a narrowband synchronization signal NB-SS.

The $(n+a)^{th}$ downlink subframe is a first downlink subframe or a first subframe including a DwPTS after the $n^{th}$ downlink subframe or the $n^{th}$ subframe including the DwPTS, the $(n-a)^{th}$ downlink subframe is a first downlink subframe or a first subframe including a DwPTS before the $n^{th}$ downlink subframe or the $n^{th}$ subframe including the DwPTS, the blank symbols are first b consecutive OFDM symbols after all OFDM symbols in the downlink subframe for transmitting the NB-PBCH or the NB-SS are arranged in ascending time order, a>0, b is equal to 3 or 5, and the NB-SS includes a narrowband primary synchronization signal NB-PSS or a narrowband secondary synchronization signal NB-SSS.

Specifically, with respect to an $i^{th}$ OFDM symbol in the blank symbols, the NB-PDCCH mapped to an $i^{th}$ OFDM symbol after all OFDM symbols in the $n^{th}$ subframe are arranged in ascending time order is repeatedly received in the $i^{th}$ OFDM symbol, and i≤5.

Further, the receiving unit 30 is further configured to receive or monitor the NB-PDCCH in a preset aggregation window.

The preset aggregation window includes c*y REs, c=b*z, c represents a quantity of OFDM symbols included in the preset aggregation window in the time domain, z is a quantity of common downlink subframes included in the preset aggregation window, y represents a quantity of subcarriers in the frequency domain and corresponding to each OFDM symbol in the preset aggregation window, b represents a quantity of consecutive OFDM symbols in each of the z common downlink subframes in the time domain, the b OFDM symbols are first b consecutive OFDM symbols after all OFDM symbols in the common downlink subframe are arranged in ascending time order, the user terminal receives a narrowband physical broadcast channel NB-PBCH or a narrowband synchronization signal NB-SS in the common downlink subframe, c≥3, z≥1, 12≥y≥1, and b is equal to 3 or 5.

Further, before receiving or monitoring the NB-PDCCH in the preset aggregation window, the receiving unit 30 is further configured to receive first configuration information transmitted by the base station.

The first configuration information includes position information of the aggregation window, and the position information of the aggregation window includes at least a start time position of the preset aggregation window and a length of the preset aggregation window, or a period and a time offset of the preset aggregation window.

Further, before receiving or monitoring the NB-PDCCH in the preset aggregation window, the receiving unit 30 is further configured to receive second configuration information transmitted by the base station.

The second configuration information instructs the user terminal to receive or monitor the NB-PDCCH in the preset aggregation window.

Further, the receiving unit 30 is configured to receive a narrowband physical downlink shared channel NB-PDSCH transmitted by a base station in an $n^{th}$ downlink subframe or a downlink pilot timeslot DwPTS in an $n^{th}$ subframe, and receive the NB-PDSCH transmitted by the base station in blank symbols in an $(n+a)^{th}$ or $(n-a)^{th}$ downlink subframe.

The $(n+a)^{th}$ or $(n-a)^{th}$ downlink subframe is a subframe for transmitting a narrowband physical broadcast channel NB-PBCH or a narrowband synchronization signal NB-SS, the $(n+a)^{th}$ downlink subframe is a first downlink subframe or a first subframe including a DwPTS after the $n^{th}$ downlink subframe or the $n^{th}$ subframe including the DwPTS, the $(n-a)^{th}$ downlink subframe is a first downlink subframe or a first subframe including a DwPTS before the $n^{th}$ downlink subframe or the $n^{th}$ subframe including the DwPTS, the blank symbols are first b consecutive OFDM symbols after all OFDM symbols in the downlink subframe for transmitting the NB-PBCH or the NB-SS are arranged in ascending time order, a>0, b is equal to 3 or 5, and the NB-SS includes a narrowband primary synchronization signal NB-PSS or a narrowband secondary synchronization signal NB-SSS.

Specifically, with respect to an $i^{th}$ OFDM symbol in the blank symbols, the NB-PDSCH mapped to an $i^{th}$ OFDM symbol after all OFDM symbols in the $n^{th}$ subframe are arranged in ascending time order is repeatedly received in the $i^{th}$ OFDM symbol, and i≤5.

Further, the receiving unit 30 is further configured to receive or monitor the NB-PDSCH in a preset aggregation window.

The preset aggregation window includes c*y REs, c=b*z, c represents a quantity of orthogonal frequency division multiplexing OFDM symbols included in the preset aggregation window in a time domain, z is a quantity of common downlink subframes included in the preset aggregation window, y represents a quantity of subcarriers in a frequency domain and corresponding to each OFDM symbol in the preset aggregation window, b represents a quantity of consecutive OFDM symbols in each of the z common downlink subframes in the time domain, the b OFDM symbols are first b consecutive OFDM symbols after all OFDM symbols in the common downlink subframe are arranged in ascending time order, the user terminal receives a narrowband physical broadcast channel NB-PBCH or a narrowband synchronization signal NB-SS in the common downlink subframe, $c \geq 3$, $z \geq 1$, $12 \geq y \geq 1$, and b is equal to 3 or 5.

Further, before receiving or monitoring the NB-PDSCH in the preset aggregation window, the receiving unit 30 is further configured to receive first configuration information transmitted by the base station, where the first configuration information includes position information of the aggregation window, and the position information of the aggregation window includes at least a start time position of the preset aggregation window and a length of the preset aggregation window, or a period and a time offset of the preset aggregation window.

Further, before receiving or monitoring the NB-PDSCH in the preset aggregation window, the receiving unit 30 is further configured to receive second configuration information transmitted by the base station, where the second configuration information instructs the user terminal to receive or monitor the NB-PDSCH in the preset aggregation window.

Another embodiment of the present invention provides a user terminal. As shown in FIG. 26, the user terminal includes an interface circuit 40, a processor 41, a memory 42, and a system bus 43.

The interface circuit 40, the processor 41, and the memory 42 are connected to the system bus 43, and communicate with each other.

It may be understood by a person skilled in the art that, a structure of the user terminal shown in FIG. 26 does not constitute a limitation on the user terminal. The user terminal may include more or fewer components than that shown in the figure, or some components are combined, or component arrangements are different.

Specifically, when the user terminal runs, the user terminal performs the physical downlink channel transmission method described in Embodiment 1 or Embodiment 2. For the specific physical downlink channel transmission method, refer to the descriptions about the embodiment shown in FIG. 5 or FIG. 20. Details are not further described herein.

Specifically, the interface circuit 40 is configured to implement a communication connection between the user terminal and a base station.

Specifically, the memory 42 may be configured to store a software program and an application module. The processor 41 executes various function applications and data processing of the user terminal by running the software program and application module stored in the memory 42. The memory 42 may mainly include a program storage area and a data storage area. The program storage area may store an operating system, an application program required by at least one function (for example, a function of transmitting a driving path request), and the like. The data storage area may store a map.

The memory 42 may include a volatile memory, for example, a high-speed random access memory (RAM, Random Access Memory). The memory 42 may also include a nonvolatile memory, for example, at least one magnetic disk storage, a flash memory, or another volatile solid-state storage.

Specifically, the processor 41 is a control center of the user terminal. The processor 41 uses various interfaces and lines to connect all parts of the entire user terminal, and executes various functions and data processing of the user terminal by running or executing the software program and/or application module stored in the memory 42 and invoking data stored in the memory 42, thereby performing overall monitoring on the user terminal.

The processor 41 may be a central processing unit (CPU, Central Processing Unit). The processor 41 may also be another general purpose processor, a digital signal processor (DSP, Digital Signal Processing), another programmable logic device or transistor logic device, a discrete hardware component, or the like. The general purpose processor may be a microprocessor, or the processor may be any conventional processor or the like.

The system bus 43 may include a data bus, a power bus, a control bus, a signal status bus, and the like. In this embodiment, for clear description, various buses in FIG. 26 are all marked as the system bus 43.

This embodiment of the present invention provides a user terminal. The user terminal receives, in the nth downlink subframe or the DwPTS in the nth subframe, the NB-PDCCH transmitted by the base station, where the NB-PDCCH is mapped to the NB-PDCCH mapped basic element whose frequency resource bandwidth is less than or equal to 180 kHz, thereby implementing PDCCH transmission in an NBIOT system.

**Embodiment 5**

This embodiment not covered by the present invention provides a communications system. As shown in FIG. 27, the communications system includes the base station according to the foregoing Embodiment 3 and the user terminal according to the foregoing Embodiment 4, and the base station and the user terminal are connected by a network.

It may be clearly understood by a person skilled in the art that, for the purpose of convenient and brief description, division of the foregoing function modules is taken as an example for illustration. In actual application, the foregoing functions can be allocated to different function modules and implemented according to a requirement, that is, an inner structure of a mobile device is divided into different function modules to implement all or part of the functions described above. For a detailed working process of the foregoing system, mobile device, and unit, reference may be made to a corresponding process in the foregoing method embodiments, and details are not described herein again.

In the several embodiments provided in this application, it should be understood that the disclosed system, mobile device, and method may be implemented in other manners. For example, the described mobile device embodiment is merely an example. For example, the module or unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the mobile device or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A method for transmitting a physical downlink channel, performed by a base station of a communications system, and comprising:

   transmitting (S101), by the base station, a narrowband physical downlink control channel, NB-PDCCH, which should be transmitted in one subframe, in an $n^{th}$ downlink subframe to a user terminal, wherein
   the NB-PDCCH is mapped to an NB-PDCCH mapped basic element, the NB-PDCCH mapped basic element comprises a first frequency resource in a frequency domain and comprises at least one orthogonal frequency division multiplexing, OFDM, symbol comprised in the $n^{th}$ downlink subframe in a time domain, a bandwidth of the first frequency resource is less than or equal to 180 kHz, and $n \geq 1$; wherein
   if the base station transmits a narrowband physical broadcast channel, NB-PBCH, or a narrowband synchronization signal, NB-SS, in an $(n+a)^{th}$ or $(n-a)^{th}$ downlink subframe, transmitting, by the base station, the NB-PDCCH in blank symbols in the $(n+a)^{th}$ or $(n-a)^{th}$ downlink subframe, wherein
   the $(n+a)^{th}$ downlink subframe is a first downlink subframe after the $n^{th}$ downlink subframe, the $(n-a)^{th}$ downlink subframe is a first downlink subframe before the $n^{th}$ downlink subframe, the blank symbols are first b consecutive OFDM symbols after all OFDM symbols in the downlink subframe for transmitting the NB-PBCH or the NB-SS are arranged in ascending time order, $a>0$, b is equal to 3 or 5, based on a number of OFDM symbols not used for transmitting the NB-PBCH or the NB-SS in the downlink subframe, and the NB-SS comprises a narrowband primary synchronization signal, NB-PSS, or a narrowband secondary synchronization signal, NB-SSS
   wherein with respect to an $i^{th}$ OFDM symbol in the blank symbols, the NB-PDCCH mapped to an $i^{th}$ OFDM symbol after all OFDM symbols in the $n^{th}$ downlink subframe are arranged in ascending time order is repeatedly transmitted in the $i^{th}$ OFDM symbol in the blank symbols, and $i \leq 5$.

2. The transmitting method according to claim 1, wherein the NB-PDCCH mapped basic element comprises a first narrowband control channel element, NB-CCE, and/or a second NB-CCE, the first NB-CCE or the second NB-CCE comprises m resource elements REs, and m>1; wherein

the NB-PDCCH is an NB-PDCCH in a first format, and the NB-PDCCH in the first format is transmitted in m REs; or
the NB-PDCCH is an NB-PDCCH in a second format, and the NB-PDCCH in the second format is transmitted in 2*m REs.

3. The transmitting method according to claim 2, wherein
the m REs comprise x*y REs, x represents a quantity of consecutive orthogonal frequency division multiplexing, OFDM, symbols in the $n^{th}$ downlink subframe in the time domain, y represents a quantity of subcarriers in the frequency domain and corresponding to each OFDM symbol in the $n^{th}$ downlink subframe, x>1, and $12 \geq y \geq 1$.

4. The transmitting method according to claim 3, wherein
x represents a quantity of consecutive OFDM symbols from a $(p+1)^{th}$ OFDM symbol to a last OFDM symbol after all OFDM symbols in the $n^{th}$ downlink subframe in the time domain are arranged in ascending time order, wherein p is a value carried in system information by the base station, and $4 \geq p \geq 0$.

5. The transmitting method according to any one of claims 2 to 4, wherein
each OFDM symbol in the m REs of the first NB-CCE or the second NB-CCE comprises six consecutive subcarriers, and indexes of the six subcarriers comprised in each OFDM symbol of the first NB-CCE or the second NB-CCE are the same.

6. The transmitting method according to any one of claims 2 to 5, wherein

if the NB-PDCCH is the NB-PDCCH in the first format, one or two NB-PDCCH candidates exist in the $n^{th}$ downlink subframe in the communications system; or
if the NB-PDCCH is the NB-PDCCH in the second format, one NB-PDCCH candidate exists in the $n^{th}$ downlink subframe in the communications system.

7. The transmitting method according to any one of claims 2 to 6, comprising:
if the NB-PDCCH is the NB-PDCCH in the second format, mapping, by the base station, the NB-PDCCH in the second format to available REs in a first resource element group and available REs in a second resource element group, wherein the available REs are REs that do not comprise any reference signal.

8. A method for receiving a physical downlink channel, performed by a user terminal of a communications system, comprising

receiving (S 102), by the user terminal, a narrowband physical downlink control channel, NB-PDCCH, which should be transmitted in one subframe, by a base station in an $n^{th}$ downlink subframe, wherein
the NB-PDCCH is mapped to an NB-PDCCH mapped basic element, the NB-PDCCH mapped basic element comprises a first frequency resource in a frequency domain and comprises at least one orthogonal frequency division multiplexing, OFDM, symbol comprised in the $n^{th}$ downlink subframe in a time domain, a bandwidth of the first frequency resource is less than or equal to 180 kHz, and $n \geq 1$; wherein
if a narrowband physical broadcast channel, NB-PBCH, or a narrowband synchronization signal, NB-SS, is transmitted in an $(n+a)^{th}$ or $(n-a)^{th}$ downlink subframe, receiving, by the user terminal, the NB-PDCCH in blank symbols in the $(n+a)^{th}$ or $(n-a)^{th}$ downlink subframe, wherein
the $(n+a)^{th}$ downlink subframe is a first downlink subframe after the $n^{th}$ downlink subframe, the $(n-a)^{th}$ downlink subframe is a first downlink subframe before the $n^{th}$ downlink subframe, the blank symbols are first b consecutive OFDM symbols after all OFDM symbols in the downlink subframe for transmitting the NB-PBCH or the NB-SS are arranged in ascending time order, a>0, b is equal to 3 or 5, based on a number of OFDM symbols not used for transmitting the NB-PBCH or the NB-SS in the downlink subframe, and the NB-SS comprises a narrowband primary synchronization signal, NB-PSS, or a narrowband secondary synchronization signal, NB-SSS;
wherein with respect to an $i^{th}$ OFDM symbol in the blank symbols, the NB-PDCCH mapped to an $i^{th}$ OFDM symbol after all OFDM symbols in the $n^{th}$ downlink subframe are arranged in ascending time order is repeatedly transmitted in the $i^{th}$ OFDM symbol in the blank symbols, and $i \leq 5$.

9. The receiving method according to claim 8, wherein the NB-PDCCH mapped basic element comprises a first narrowband control channel element, NB-CCE, and/or a second NB-CCE, the first NB-CCE or the second NB-CCE comprises m resource elements, REs, and m>1; wherein

the NB-PDCCH is an NB-PDCCH in a first format, and the NB-PDCCH in the first format is received in m REs; or the NB-PDCCH is an NB-PDCCH in a second format, and the NB-PDCCH in the second format is received in 2*m REs.

10. The receiving method according to claim 9, wherein
the m REs comprise x*y REs, x represents a quantity of consecutive orthogonal frequency division multiplexing, OFDM, symbols in the $n^{th}$ downlink subframe in the time domain, y represents a quantity of subcarriers in the frequency domain and corresponding to each OFDM symbol in the $n^{th}$ downlink subframe, x>1, and $12 \geq y \geq 1$.

11. The receiving method according to claim 10, wherein
x represents a quantity of consecutive OFDM symbols from a $(p+1)^{th}$ OFDM symbol to a last OFDM symbol after all OFDM symbols in the $n^{th}$ downlink subframe in the time domain are arranged in ascending time order, wherein p is a value carried in system information by the base station, and $4 \geq p \geq 0$.

12. The receiving method according to any one of claims 9 to 11, wherein each OFDM symbol in the m REs of the first NB-CCE or the second NB-CCE comprises six consecutive subcarriers, and indexes of the six subcarriers comprised in each OFDM symbol of the first NB-CCE or the second NB-CCE are the same.

13. The receiving method according to any one of claims 9 to 11, wherein

if the NB-PDCCH is the NB-PDCCH in the first format, one or two NB-PDCCH candidates exist in the $n^{th}$ downlink subframe in the communications system; or
if the NB-PDCCH is the NB-PDCCH in the second format, one NB-PDCCH candidate exists in the $n^{th}$ downlink subframe in the communications system.

14. Abase station, comprising means for carrying out the steps of any one of claims 1-7.

15. A user terminal, comprising means for carrying out the steps of any one of claims 8-13.

**Patentansprüche**

1. Verfahren zum Übertragen eines physischen Downlink-Kanals, durchgeführt durch eine Basisstation eines Kommunikationssystems, und Folgendes umfassend:

Übertragen (S101), durch die Basisstation, eines schmalbandigen physischen Downlink-Steuerkanals, NB-PDCCH, der in einem Subframe übertragen werden sollte, in einem n-ten Downlink-Subframe an ein Benutzergerät, wobei der NB-PDCCH auf ein NB-PDCCH-abgebildetes Grundelement abgebildet wird, wobei das NB-PDCCH-abgebildete Grundelement eine erste Frequenzressource im Frequenzbereich umfasst und mindestens ein Orthogonales-Frequenzmultiplex-Symbol bzw. OFDM-Symbol umfasst, das in dem n-ten Downlink-Subframe im Zeitbereich enthalten ist, wobei eine Bandbreite der ersten Frequenzressource kleiner oder gleich 180 kHz ist und n $\geq$ 1 ist, wobei
falls die Basisstation einen schmalbandigen physischen Rundsendekanal, NB-PBCH, oder ein schmalbandiges Synchronisationssignal, NB-SS, in einem (n+a)-ten oder (n-a)-ten Downlink-Subframe überträgt, Übertragen, durch die Basisstation, des NB-PDCCH in Leersymbolen in dem (n+a)-ten oder (n-a)-ten Downlink-Subframe, wobei
der (n+a)-te Downlink-Subframe ein erster Downlink-Subframe nach dem n-ten Downlink-Subframe ist, der (n-a)-te Downlink-Subframe ein erster Downlink-Subframe vor dem n-ten Downlink-Subframe ist, wobei die Leersymbole die ersten b aufeinanderfolgenden OFDM-Symbole sind, nachdem alle OFDM-Symbole in dem Downlink-Subframe zum Übertragen des NB-PBCH oder des NB-SS in aufsteigender zeitlicher Reihenfolge angeordnet wurden, wobei a > 0, b gleich 3 oder 5 ist, basierend auf einer Anzahl von OFDM-Symbolen, die nicht zum Übertragen des NB-PBCH oder des NB-SS in dem Downlink-Subframe verwendet werden, und das NB-SS ein schmalbandiges Primärsynchronisationssignal, NB-PSS, oder ein schmalbandiges Sekundärsynchronisationssignal, NB-SSS, umfasst,

wobei, im Hinblick auf ein i-tes OFDM-Symbol in den Leersymbolen, der auf ein i-tes OFDM-Symbol abgebildete NB-PDCCH, nachdem alle OFDM-Symbole in dem n-ten Downlink-Subframe in aufsteigender zeitlicher Reihenfolge angeordnet wurden, wiederholt in dem i-ten OFDM-Symbol in den Leersymbolen übertragen wird, und $i \leq 5$ ist.

2. Übertragungsverfahren nach Anspruch 1, wobei das NB-PDCCH-abgebildete Grundelement ein erstes Schmalbandiger-Steuerkanal-Element, NB-CCE, und/oder ein zweites NB-CCE umfasst, wobei das erste NB-CCE oder das zweite NB-CCE m Ressourcenelemente REs umfasst und $m > 1$ ist; wobei

   der NB-PDCCH ein NB-PDCCH in einem ersten Format ist, und der NB-PDCCH in dem ersten Format in m REs übertragen wird; oder
   der NB-PDCCH ein NB-PDCCH in einem zweiten Format ist, und der NB-PDCCH in dem zweiten Format in 2*m REs übertragen wird.

3. Übertragungsverfahren nach Anspruch 2, wobei
   die m REs x*y REs umfassen, wobei x eine Anzahl von aufeinanderfolgenden Orthogonales-Frequenzmultiplex-Symbolen bzw. OFDM-Symbolen in dem n-ten Downlink-Subframe im Zeitbereich repräsentiert, y eine Anzahl von Subträgern im Frequenzbereich repräsentiert und jedem OFDM-Symbol in dem n-ten Downlink-Subframe entspricht, wobei $x > 1$ ist und $12 \geq y \geq 1$ gilt.

4. Übertragungsverfahren nach Anspruch 3, wobei
   x einer Anzahl von aufeinanderfolgenden OFDM-Symbolen von einem (p+1)-ten OFDM-Symbol bis zu einem letzten OFDM-Symbol entspricht, nachdem alle OFDM-Symbole in dem n-ten Downlink-Subframe im Zeitbereich in aufsteigender zeitlicher Reihenfolge angeordnet wurden, wobei p ein in Systeminformationen durch die Basisstation geführter Wert ist und $4 \geq p \geq 0$ gilt.

5. Übertragungsverfahren nach einem der Ansprüche 2 bis 4, wobei
   jedes OFDM-Symbol in den m REs des ersten NB-CCE oder des zweiten NB-CCE sechs aufeinanderfolgende Subträger umfasst, und Indices der sechs Subträger, die in jedem OFDM-Symbol des ersten NB-CCE oder des zweiten NB-CCE enthalten sind, dieselben sind.

6. Übertragungsverfahren nach einem der Ansprüche 2 bis 5, wobei es,

   falls der NB-PDCCH der NB-PDCCH in dem ersten Format ist, einen oder zwei NB-PDCCH-Kandidaten in dem n-ten Downlink-Subframe in dem Kommunikationssystem gibt; oder
   falls der NB-PDCCH der NB-PDCCH in dem zweiten Format ist, einen NB-PDCCH-Kandidaten in dem n-ten Downlink-Subframe in dem Kommunikationssystem gibt.

7. Übertragungsverfahren nach einem der Ansprüche 2 bis 6, das Folgendes umfasst: falls der NB-PDCCH der NB-PDCCH in dem zweiten Format ist, Abbilden, durch die Basisstation, des NB-PDCCH in dem zweiten Format auf verfügbare REs in einer ersten Ressourcenelementgruppe und auf verfügbare REs in einer zweiten Ressourcenelementgruppe, wobei die verfügbaren REs REs sind, die kein Referenzsignal umfassen.

8. Verfahren zum Empfangen eines physischen Downlink-Kanals, durchgeführt durch ein Benutzergerät eines Kommunikationssystems, und Folgendes umfassend:

   Empfangen (S102), durch das Benutzergerät, eines schmalbandigen physischen Downlink-Steuerkanals, NB-PDCCH, der in einem Subframe übertragen werden sollte, durch eine Basisstation in einem n-ten Downlink-Subframe, wobei der NB-PDCCH auf ein NB-PDCCH-abgebildetes Grundelement abgebildet wird, wobei das NB-PDCCH-abgebildete Grundelement eine erste Frequenzressource im Frequenzbereich umfasst und mindestens ein Orthogonales-Frequenzmultiplex-Symbol bzw. OFDM-Symbol umfasst, das in dem n-ten Downlink-Subframe im Zeitbereich enthalten ist, wobei eine Bandbreite der ersten Frequenzressource kleiner oder gleich 180 kHz ist und $n \geq 1$ ist, wobei
   falls ein schmalbandiger physischer Rundsendekanal, NB-PBCH, oder ein schmalbandiges Synchronisationssignal, NB-SS, in einem (n+a)-ten oder (n-a)-ten Downlink-Subframe übertragen wird, Empfangen, durch das Benutzergerät, des NB-PDCCH in Leersymbolen in dem (n+a)-ten oder (n-a)-ten Downlink-Subframe, wobei der (n+a)-te Downlink-Subframe ein erster Downlink-Subframe nach dem n-ten Downlink-Subframe ist, der (n-a)-te Downlink-Subframe ein erster Downlink-Subframe vor dem n-ten Downlink-Subframe ist, wobei die Leersymbole die ersten b aufeinanderfolgenden OFDM-Symbole sind, nachdem alle OFDM-Symbole in dem Downlink-Subframe zum Übertragen des NB-PBCH oder des NB-SS in aufsteigender zeitlicher Reihenfolge angeordnet wurden, wobei a > 0, b gleich 3 oder 5 ist, basierend auf einer Anzahl von OFDM-Symbolen, die nicht zum Übertragen des NB-PBCH oder des NB-SS in dem Downlink-Subframe verwendet werden, und das NB-SS ein schmalbandiges Primärsynchronisationssignal, NB-PSS, oder ein schmalbandiges Sekundärsynchronisationssignal, NB-SSS, umfasst;

wobei, im Hinblick auf ein i-tes OFDM-Symbol in den Leersymbolen, der auf ein i-tes OFDM-Symbol abgebildete NB-PDCCH, nachdem alle OFDM-Symbole in dem n-ten Downlink-Subframe in aufsteigender zeitlicher Reihenfolge angeordnet wurden, wiederholt in dem i-ten OFDM-Symbol in den Leersymbolen übertragen wird, und i ≤ 5 ist.

9. Empfangsverfahren nach Anspruch 8, wobei das NB-PDCCH-abgebildete Grundelement ein erstes Schmalbandiger-Steuerkanal-Element, NB-CCE, und/oder ein zweites NB-CCE umfasst, wobei das erste NB-CCE oder das zweite NB-CCE m Ressourcenelemente, REs, umfasst und m > 1 ist; wobei

der NB-PDCCH ein NB-PDCCH in einem ersten Format ist, und der NB-PDCCH in dem ersten Format in m REs empfangen wird; oder
der NB-PDCCH ein NB-PDCCH in einem zweiten Format ist, und der NB-PDCCH in dem zweiten Format in 2*m REs empfangen wird.

10. Empfangsverfahren nach Anspruch 9, wobei
die m REs x*y REs umfassen, wobei x eine Anzahl von aufeinanderfolgenden Orthogonales-Frequenzmultiplex-Symbolen bzw. OFDM-Symbolen in dem n-ten Downlink-Subframe im Zeitbereich repräsentiert, y eine Anzahl von Subträgern im Frequenzbereich repräsentiert und jedem OFDM-Symbol in dem n-ten Downlink-Subframe entspricht, wobei x > 1 ist und 12 ≥ y ≥ 1 gilt.

11. Empfangsverfahren nach Anspruch 10, wobei
x einer Anzahl von aufeinanderfolgenden OFDM-Symbolen von einem (p+1)-ten OFDM-Symbol bis zu einem letzten OFDM-Symbol entspricht, nachdem alle OFDM-Symbole in dem n-ten Downlink-Subframe im Zeitbereich in aufsteigender zeitlicher Reihenfolge angeordnet wurden, wobei p ein in Systeminformationen durch die Basisstation geführter Wert ist und 4 ≥ p ≥ 0 gilt.

12. Empfangsverfahren nach einem der Ansprüche 9 bis 11, wobei jedes OFDM-Symbol in den m REs des ersten NB-CCE oder des zweiten NB-CCE sechs aufeinanderfolgende Subträger umfasst, und Indices der sechs Subträger, die in jedem OFDM-Symbol des ersten NB-CCE oder des zweiten NB-CCE enthalten sind, dieselben sind.

13. Empfangsverfahren nach einem der Ansprüche 9 bis 11, wobei es,

falls der NB-PDCCH der NB-PDCCH in dem ersten Format ist, einen oder zwei NB-PDCCH-Kandidaten in dem n-ten Downlink-Subframe in dem Kommunikationssystem gibt; oder
falls der NB-PDCCH der NB-PDCCH in dem zweiten Format ist, einen NB-PDCCH-Kandidaten in dem n-ten Downlink-Subframe in dem Kommunikationssystem gibt.

14. Basisstation, die Mittel zum Ausführen der Schritte nach einem der Ansprüche 1-7 umfasst.

15. Benutzergerät, das Mittel zum Ausführen der Schritte nach einem der Ansprüche 8-13 umfasst.

## Revendications

1. Procédé de transmission d'un canal physique de liaison descendante, exécuté par une station de base d'un système de communication, et comprenant :

la transmission (S101), par la station de base, d'un canal physique de commande de liaison descendante de bande étroite, NB-PDCCH, qui doit être transmis dans une seule sous-trame, dans une n-ième sous-trame de liaison descendante à un terminal utilisateur, dans lequel
le NB-PDCCH est mappé sur un élément de base mappé de NB-PDCCH, l'élément de base mappé de NB-PDCCH comprend une première ressource de fréquence dans un domaine fréquentiel et comprend au moins un symbole de multiplexage par répartition orthogonale de la fréquence, OFDM, compris dans le $n^{ième}$ sous-trame de liaison descendante dans un domaine temporel, une largeur de bande de la première ressource de fréquence est inférieure ou égale à 180 kHz, et $n \geq 1$ ; dans lequel si la station de base transmet un canal physique de diffusion de bande étroite, NB-PBCH, ou un signal de synchronisation de bande étroite, NB-SS, dans une $(n+a)^{ième}$ ou $(n-a)^{ième}$ sous-trame de liaison descendante, la transmission, par la station de base, du NB-PDCCH dans des symboles vides dans la $(n+a)^{ième}$ ou $(n-a)^{ième}$ sous-trame de liaison descendante, dans lequel

la $(n+a)^{ième}$ sous-trame de liaison descendante est une première sous-trame de liaison descendante après la $n^{ième}$ sous-trame de liaison descendante, la $(n-a)^{ième}$ sous-trame de liaison descendante est une première sous-trame de liaison descendante avant la $n^{ième}$ sous-trame de liaison descendante, les symboles vides sont des premiers b symboles OFDM consécutifs après que tous les symboles OFDM dans la sous-trame de liaison descendante pour transmettre le NB-PBCH ou le NB-SS sont agencés en ordre temporel croissant, a>0, b est égal à 3 ou 5, en fonction d'un nombre de symboles OFDM inutilisés pour transmettre le NB-PBCH ou le NB-SS dans la sous-trame de liaison descendante, et le NB-SS comprend un signal de synchronisation primaire de bande étroite, NB-PSS, ou un signal de synchronisation secondaire de bande étroite, NB-SSS, dans lequel relativement à un $i^{ième}$ symbole OFDM dans les symboles vides, le NB-PDCCH mappé sur un $i^{ième}$ symbole OFDM après que tous les symboles OFDM dans la $n^{ième}$ sous-trame de liaison descendante sont agencés en ordre temporel croissant est transmis de manière répétée dans l'$i^{ième}$ symbole OFDM dans les symboles vides, et $i \leq 5$.

2. Procédé de transmission selon la revendication 1, dans lequel l'élément de base mappé de NB-PDCCH comprend un premier élément de canal de commande de bande étroite, NB-CCE, et/ou un second NB-CCE, le premier NB-CCE ou le second NB-CCE comprend m éléments de ressource RE, et m>l ; dans lequel

le NB-PDCCH est un NB-PDCCH dans un premier format, et le NB-PDCCH dans le premier format est transmis dans m RE ; ou
le NB-PDCCH est un NB-PDCCH dans un second format, et le NB-PDCCH dans le second format est transmis dans 2*m RE.

3. Procédé de transmission selon la revendication 2, dans lequel
les m RE comprennent x*y RE, x représente une quantité de symboles de multiplexage par répartition orthogonale de la fréquence, OFDM, consécutifs dans la $n^{ième}$ sous-trame de liaison descendante dans le domaine temporel, y représente une quantité de sous-porteuses dans le domaine fréquentiel et correspondant à chaque symbole OFDM dans la $n^{ième}$ sous-trame de liaison descendante, x>1, et $12 \geq y \geq 1..$

4. Procédé de transmission selon la revendication 3, dans lequel
x représente une quantité de symboles OFDM consécutifs d'un $(p+1)^{ième}$ symbole OFDM à un dernier symbole OFDM après que tous les symboles OFDM dans la $n^{ième}$ sous-trame de liaison descendante dans le domaine temporel sont agencés en ordre temporel croissant, dans lequel p est une valeur portée dans des informations système par la station de base, et $4 \geq p \geq 0$.

5. Procédé de transmission selon l'une quelconque des revendications 2 à 4, dans lequel chaque symbole OFDM dans les m RE du premier NB-CCE ou le second NB-CCE comprend six sous-porteuses consécutives, et les indices des six sous-porteuses comprises dans chacune symbole OFDM du premier NB-CCE ou du second NB-CCE sont les mêmes.

6. Procédé de transmission selon l'une quelconque des revendications 2 à 5, dans lequel

si le NB-PDCCH est le NB-PDCCH dans le premier format, un ou deux candidats de NB-PDCCH existent dans la $n^{ième}$ sous-trame de liaison descendante dans le système de communication ; ou
si le NB-PDCCH est le NB-PDCCH dans le second format, un candidat de NB-PDCCH existe dans la $n^{ième}$ sous-trame de liaison descendante dans le système de communication.

7. Procédé de transmission selon l'une quelconque des revendications 2 à 6, comprenant
si le NB-PDCCH est le NB-PDCCH dans le second format, le mappage, par la station de base, du NB-PDCCH dans le second format sur des RE disponibles dans un premier groupe d'éléments de ressource et des RE disponibles dans un second groupe d'éléments de ressource, les RE disponibles étant des RE qui ne comprennent aucun signal de référence.

**8.** Procédé de réception d'un canal physique de liaison descendante, réalisé par un terminal utilisateur d'un système de communication, comprenant :

la réception (S102), par le terminal utilisateur, d'un canal physique de commande de liaison descendante de bande étroite, NB-PDCCH, qui doit être transmis dans une seule sous-trame, par une station de base dans une $n^{ième}$ sous-trame de liaison descendante, dans lequel le NB-PDCCH est mappé sur un élément de base mappé de NB-PDCCH, l'élément de base mappé de NB-PDCCH comprend une première ressource de fréquence dans un domaine fréquentiel et comprend au moins un symbole de multiplexage par répartition orthogonale de la fréquence, OFDM, compris dans la $n^{ième}$ sous-trame de liaison descendante dans un domaine temporel, une largeur de bande de la première ressource de fréquence est inférieure ou égale à 180 kHz, et n $\geq$ 1 ; dans lequel

si un canal physique de diffusion de bande étroite, NB-PBCH, ou un signal de synchronisation de bande étroite, NB-SS, est transmis dans une $(n+a)^{ième}$ ou $(n-a)^{ième}$ sous-trame de liaison descendante, la réception, par le terminal utilisateur, du NB-PDCCH dans des symboles vides dans la $(n+a)^{ième}$ ou $(n-a)^{ième}$ sous-trame de liaison descendante, dans lequel

la $(n+a)^{ième}$ sous-trame de liaison descendante est une première sous-trame de liaison descendante après la $n^{ième}$ sous-trame de liaison descendante, la $(n-a)^{ième}$ sous-trame de liaison descendante est une première sous-trame de liaison descendante avant la $n^{ième}$ sous-trame de liaison descendante, les symboles vides sont des premiers b symboles OFDM consécutifs après que tous les symboles OFDM dans la sous-trame de liaison descendante pour transmettre le NB-PBCH ou le NB-SS sont agencés en ordre temporel croissant, a>0, b est égal à 3 ou 5, en fonction d'un nombre de symboles OFDM inutilisés pour transmettre le NB-PBCH ou le NB-SS dans la sous-trame de liaison descendante, et le NB-SS comprend un signal de synchronisation primaire de bande étroite, NP-PSS, ou un signal de synchronisation secondaire de bande étroite, NB-SSS ;

dans lequel relativement à un $i^{ième}$ symbole OFDM dans les symboles vides, le NB-PDCCH mappé sur un $i^{ième}$ symbole OFDM après que tous les symboles OFDM dans la $n^{ième}$ sous-trame de liaison descendante sont agencés en ordre temporel croissant est transmis de manière répétée dans l'$i^{ième}$ symbole OFDM dans les symboles vides, et i $\leq$ 5.

**9.** Procédé de réception selon la revendication 8, dans lequel l'élément de base mappé de NB-PDCCH comprend un premier élément de canal de commande de bande étroite, NB-CCE, et/ou un second NB-CCE, le premier NB-CCE ou le second NB-CCE comprend m éléments de ressources, RE, et m>l ; dans lequel

le NB-PDCCH est un NB-PDCCH dans un premier format, et le NB-PDCCH dans le premier format est transmis dans m RE ; ou

le NB-PDCCH est un NB-PDCCH dans un second format, et le NB-PDCCH dans le second format est reçu dans 2*m RE.

**10.** Procédé de réception selon la revendication 9, dans lequel les m RE comprennent x*y RE, x représente une quantité de symboles de multiplexage par répartition orthogonale de la fréquence, OFDM, consécutifs dans la $n^{ième}$ sous-trame de liaison descendante dans le domaine temporel, y représente une quantité de sous-porteuses dans le domaine fréquentiel et correspondant à chaque symbole OFDM dans la $n^{ième}$ sous-trame de liaison descendante, x>1, et 12$\geq$y$\geq$1.

**11.** Procédé de réception selon la revendication 10, dans lequel x représente une quantité de symboles OFDM consécutifs d'un $(p+1)^{ième}$ symbole OFDM à un dernier symbole OFDM après que tous les symboles OFDM dans la $n^{ième}$ sous-trame de liaison descendante dans le domaine temporel sont agencés en ordre temporel croissant, dans lequel p est une valeur portée dans des informations système par la station de base, et 4$\geq$p$\geq$0.

**12.** Procédé de réception selon l'une quelconque des revendications 9 à 11, dans lequel chaque symbole OFDM dans les m RE du premier NB-CCE ou le second NB-CCE comprend six sous-porteuses consécutives, et les indices des six sous-porteuses comprises dans chaque symbole OFDM du premier NB-CCE ou du second NB-CCE sont les mêmes.

**13.** Procédé de réception selon l'une quelconque des revendications 9 à 11, dans lequel

si le NB-PDCCH est le NB-PDCCH dans le premier format, un ou deux candidats de NB-PDCCH existent dans la $n^{ième}$ sous-trame de liaison descendante dans le système de communication ; ou

si le NB-PDCCH est le NB-PDCCH dans le second format, un candidat de NB-PDCCH existe dans la $n^{ième}$

sous-trame de liaison descendante dans le système de communication.

14. Station de base, comprenant des moyens pour réaliser les étapes selon l'une quelconque des revendications 1 à 7.

15. Equipement utilisateur, comprenant des moyens pour réaliser les étapes selon l'une quelconque des revendications 8 à 13.

10 milliseconds

0.5 millisecond

| #0 | #1 | #2 | #3 | — — — | #18 | #19 |

1 millisecond

FIG. 1

10 milliseconds

5 milliseconds

| 1 | 2 | 3 | 4 | 5 | 6 | 7 | 8 | 9 | 10 |

1 millisecond

DwPTS GP UpPTS

DwPTS GP UpPTS

FIG. 2

One downlink timeslot

$N_{\text{symb}}^{\text{DL}}$ OFDM symbols

$k = N_{\text{RB}}^{\text{DL}} N_{\text{sc}}^{\text{RB}} - 1$

Resource block
( $N_{\text{symb}}^{\text{DL}} \times N_{\text{sc}}^{\text{RB}}$ resource elements)

Resource element

$N_{\text{RB}}^{\text{DL}} \times N_{\text{sc}}^{\text{RB}}$ subcarriers

$N_{\text{sc}}^{\text{RB}}$ subcarriers

$k = 0$

$l = 0$

$l = N_{\text{symb}}^{\text{DL}} - 1$

FIG. 3

FIG. 4

| A base station transmits an NB-PDCCH in an $n^{th}$ downlink subframe or a DwPTS in an $n^{th}$ subframe to a user terminal, where $n \geq 1$ | S101 |
|---|---|

| The user terminal receives the NB-PDCCH transmitted by the base station in the $n^{th}$ downlink subframe or the DwPTS in the $n^{th}$ subframe | S102 |
|---|---|

FIG. 5

FIG. 6

FIG. 7

FIG. 8

FIG. 9

FIG. 10

Available REs of a second NB-CCE

Available REs of a first NB-CCE

$l = 0$　　　　$l = 6$　$l = 0$　　　　$l = 6$

Even timeslot　　　Odd timeslot

$R_0$ CRS on an LTE system port 0

$R_1$ CRS on an LTE system port 1

$R_2$ CRS on an LTE system port 2

$R_3$ CRS on an LTE system port 3

NB-RS of an NBIOT system

FIG. 11

Available REs of
a second NB-CCE

Available REs of
a first NB-CCE

$R_1$    $R_0$    $R_1$    $R_0$

$R_0$    $R_1$    $R_0$    $R_1$

$R_1$    $R_0$    $R_1$    $R_0$

$R_0$    $R_1$    $R_0$    $R_1$

$l = 0$      $l = 5$   $l = 0$      $l = 5$

Even timeslot     Odd timeslot

$R_0$   CRS on an LTE
system port 0

$R_1$   CRS on an LTE
system port 1

NB-RS of an
NBIOT system

FIG. 12

FIG. 13

$l = 0$        $l = 6$   $l = 0$        $l = 6$

Even timeslot     Odd timeslot

| | | |
|---|---|---|
| $R_0$ | CRS on an LTE system port 0 | Available RE of a first NB-CCE |
| $R_1$ | CRS on an LTE system port 1 | Available RE of a second NB-CCE |
| | NB-RS of an NBIOT system | |

FIG. 14

Even timeslot          Odd timeslot

$R_0$   CRS on an LTE
       system port 0

$R_1$   CRS on an LTE
       system port 1

       NB-RS of an
       NBIOT system

$R_2$   CRS on an LTE
       system port 2

$R_3$   CRS on an LTE
       system port 3

       Available RE of a        Available RE of a
       first NB-CCE             second NB-CCE

FIG. 15

| | $l = 0$ | | | | | $l = 5$ | $l = 0$ | | | | | $l = 5$ |

Even timeslot     Odd timeslot

$R_0$   CRS on an LTE system port 0      Available RE of a first NB-CCE

$R_1$   CRS on an LTE system port 1      Available RE of a second NB-CCE

NB-RS of an NBIOT system

FIG. 16

FIG. 17

Subframe n — Subframe n+a

Second NB-CCE

First NB-CCE

$l=0$  $l=6$  $l=0$  $l=6$  $l=0$  $l=6$  $l=0$  $l=6$

Even timeslot    Odd timeslot

Three OFDM symbols

NB-RS of an NBIOT system

Available RE of the first NB-CCE

Available RE of the second NB-CCE

NB-PBCH, NB-PSS, or NB-SSS

FIG. 18

Subframe n ───────────► Subframe n+a ───────►

*l* = 0   *l* = 6 *l* = 0   *l* = 6 *l* = 0   *l* = 6 *l* = 0   *l* = 6

Even timeslot ───────► Odd timeslot ───────►

Three OFDM symbols

▦ NB-PBCH, NB-PSS, or NB-SSS

NB-RS of an NBIOT system

⊠ Available RE of the first NB-CCE

■ Available RE of the second NB-CCE

FIG. 19

A base station transmits a narrowband physical downlink shared channel NB-PDSCH in an n$^{th}$ downlink subframe or a DwPTS in an n$^{th}$ subframe to a user terminal, and if the base station transmits an NB-PBCH or an NB-SS in an (n+a)$^{th}$ or (n–a)$^{th}$ downlink subframe, the base station transmits the NB-PDSCH in blank symbols in the (n+a)$^{th}$ or (n–a)$^{th}$ downlink subframe ─── S201

The user terminal receives the NB-PDSCH transmitted by the base station in the n$^{th}$ downlink subframe or the DwPTS in the n$^{th}$ subframe and the NB-PDSCH transmitted by the base station in the blank symbols in the (n+a)$^{th}$ or (n–a)$^{th}$ downlink subframe, where the (n+a)$^{th}$ or (n–a)$^{th}$ downlink subframe is a subframe for transmitting the NB-PBCH or the NB-SS ─── S202

FIG. 20

Base station 1

Transmitting unit 10

**FIG. 21**

Base station 1

Transmitting unit 10

Processing unit 11

**FIG. 22**

Interface circuit 20 ⟷ Processor 21

23

Base station

Memory 22

**FIG. 23**

User terminal 1

Receiving unit 30

**FIG. 24**

User terminal 1

Receiving unit 30

Processing unit 31

FIG. 25

Interface circuit 40

Processor 41

43

User terminal

Memory 42

FIG. 26

Communications system

Base station

User terminal

FIG. 27